# EUROPEAN PATENT SPECIFICATION

(11) **EP 0 572 366 B1**
(45) Date of publication and mention of the grant of the patent: **12.08.1998**
(21) Application number: 93850103.8
(22) Date of filing: 14.05.1993
(51) Int. Cl.: H04J 3/07, G06F 5/06

(54) **A method and an arrangement relating to memory write-in and read-out**
Verfahren und Anordnung zum Einschreiben und Auslesen in einem Speicher
Procédé et dispositif d'écriture-lecture dans une mémoire

(30) Priority: 27.05.1992 SE 9201672; 25.09.1992 SE 9202774
(43) Date of publication of application: 01.12.1993
(73) Proprietor: TELEFONAKTIEBOLAGET LM ERICSSON, 126 25 Stockholm (SE)
(72) Inventor: Sahl, Stefan, S-126 34 Hägersten (SE); Sydhoff, Per, S-126 57 Hägersten (SE)
(74) Representative: Wideberg, Olle Sven

(56) References cited:
- EP-A- 0 292 208
- EP-A- 0 459 686
- EP-A- 0 475 497
- EP-A- 0 507 385
- WO-A-88/07300
- US-A- 4 884 286
- US-A- 4 941 156
- US-A- 4 942 593
- US-A- 5 052 025

## Description

### TECHNICAL FIELD

The present invention relates to the technical field of digital teletransmission. More precisely, the invention relates to a method and an arrangement for writing data into and reading data from an addressable memory, particularly an addressable memory for transmitting data from a synchronous digital hierarchy system (SDH) to a plesiochronous digital hierarchy system (PDH), and to a teletransmission system comprising said arrangement.

### BACKGROUND OF THE INVENTION

It is known to use so-called jitter attenuation circuits to extinguish jitter on a write clock and an incoming data stream connected to the write clock. Jitter on the write clock causes the frequency of the write clock to vary as a result of an imperfect transmission system. Known types of jitter attenuation circuits are comprised of a buffer in which an FIFO data register is used to temporarily store incoming data. The FIFO data register is coupled to a write counter which discloses the data-register address into which incoming data shall be written. The write counter is counted-up in keeping with the incoming write clock. Also coupled to the FIFO data register is a read counter which discloses the address of the memory cell in the data register from which data shall be read out. The read counter is counted forwards in keeping with a read clock. A phase detector measures the phase difference between the write counter and the read counter. The difference between the write counter and the read counter shall be as large as possible, so as to avoid the counters pointing to the same memory cell at one and the same time. When the difference is optimal, the data register is half full. When the difference between the counters deviates from the optimum difference in a predetermined manner, the phase detector produces an error signal which causes an oscillator to increase or decrease the read clock frequency so as to change the read-out rate and prevent the data register from becoming excessively full or excessively empty of data. In this way, the rate at which information is read-out is controlled so that, on average, it is equally as high as the rate at which information is read-in. Thus, "jitter attenuation" implies that variations in the write-in rate are compensated by correspondingly controlling the read-out rate. This can be achieved, for instance, by ensuring that the read clock will always be fast, wherein the phase error signal indicates that the read clock shall be stopped for the duration of one clock pulse. This is realized in the known technique by ensuring that the phase error signal obtains a generally regular pattern.

One such attenuation circuit is described in U.S. Patent Specification U.S. 4,941,156. In the case of this known circuit, the read clock is synchronized with the write clock with the aid of a phase-locking circuit. The read clock is generated by a crystal-controlled oscillator in the phase-locking circuit. The crystal-controlled oscillator is, in turn, controlled by switched capacitors which are switched in quantized steps to change the frequency of the read clock in response to the difference between the two counters.

Another circuit for bitrate adjustment is known through EP 0,475,497 A2 and comprises a memory, a write counter, a read counter and a regulator, the latter measuring the difference between the counters and controls the equalization. Also, included in the regulator is means for calculating the mean value of the difference during a predetermined amount of time.

### SUMMARY OF THE INVENTION

In more modern types of digital transmission systems including SDH-systems (Synchronous Digital Hierarchy) and PDH-systems (Plesiochronous Digital Hierarchy), the differences in the rates between several incoming signals to the SDH-system are equalized so as to enable these signals to be switched within the SDH-system. These differences in rates are due to the fact that the rates of the incoming signals are generated by different oscillators and because these oscillators can never be trimmed to work at precisely the same frequency. There will always be a small deviation from a nominal system frequency. A highest permitted deviation from the nominal frequency is specified for the PDH-system. Equalization of the rate difference is achieved by so-called bit justification, in which an additional bit is inserted into a frame or a bit is withdrawn from the frame. Subsequent to equalizing the rate difference by bit justification, the incoming signals are fully synchronous and can be switched in a cross connection matrix in the SDH-system, for instance. When the signals are switched in the SDH-system, they are delivered to an asynchronous buffer on the output of the SDH-system, at the transition to the PDH-system. As a result of the aforesaid bit justification, the asynchronous buffer will receive one bit more or one bit less than the nominal number of bits in a frame. One bit more or one bit less than the number of bits normally contained in a frame is also written-in. Consequently, the read-out rate of the buffer must be controlled so that said rate will coincide with the write-in rate. Subsequent to being read-out from the buffer, the signals are multiplexed for continued transmission.

Such bit justifications occur relatively seldom. If an arrangement according to the known technique is used to adjust the read-out rate in a system which utilizes the aforedescribed bit justification facility, the following occurs. Provided that no bit justification exists on the signal arriving at the buffer, the phase error signal in the known arrangement will have a generally regular and uniform pattern, but when a bit justification is present, the phase detector will detect a phase error in the data register and a jump will occur in the pattern of the phase error signal. This jump on the phase error signal results in a jerk or jump in the read-out rate, which in turn results in troublesome jitter on the buffer output. The jitter problem occurs because the time between two bit justifications is much greater than the time constant in the phase-locking circuit of a typical digital demultiplexer.

The invention solves the jitter problem arising from the afore-described bit justifications, by means of a so-called bit-leaking method and with the aid of means for carrying out the method. The bit-leaking means is comprised of an asynchronous buffer and, similar to the known technique, includes an FIFO-register with associated write-counter and read-counter for generating write addresses and read addresses. In accordance with the present invention, the asynchronous buffer also includes a mean value counter and a first and a second phase detector respectively. The mean value counter generates mean value addresses around which the generated write addresses pendulate. On average, the write addresses correspond to the mean value addresses. However, as a result of the bit justifications, the generated write addresses will deviate from the mean value addresses to a greater extent than is permitted. The write addresses are permitted to vary within certain limits, although the mean value counter is adjusted when the write address assumes a limit value, in accordance with the present invention. The first phase detector is operable to detect write addresses and mean value addresses. The phase detector also compares the detected write address with a front and back address limit value calculated in relation to the simultaneously detected mean value address. The mean value counter is stepwise adjusted one mean value address when the write address assumes one of its limit values, so that, on average, the mean value counter will follow the write counter and generate continuously addresses which constitute the mean value of the write addresses.

The earlier mentioned bit leakage is corresponded by the stepwise adjustment to the mean value counter as a result of the bit justification. The second phase detector is operable to detect generated read addresses and mean value addresses. The second phase detector is also operable to compare the detected read address with a stuff limit value calculated in relation to the simultaneously detected mean value address. When the read address assumes this stuff limit value, the second phase detector will produce a phase error signal which indicates that the read-out rate from the buffer is too high, wherein read-out is stopped for the duration of one read clock pulse. The read-out rate is therewith adjusted in relation to the write-in rate, so that the read-out rate will be, on average, equally as high as the write-in rate.

The invention is based on the concept of controlling the read-out rate, by comparing the read address with a mean value address instead of comparing the read address with the write address directly, as in the case of the known technique. The mean value addresses follow the write addresses and their rate variations, although sudden changes in rate caused by bit justifications are transferred to the mean value counter in several small steps, so that the change in the generation of mean value addresses will take a "softer" course than the change occurring when generating write addresses. Subsequent to having compared the read address with the mean value address for adjustment of the read-out rate, it is beneficial that no extremely abrupt changes occur in the mean value addresses. Those changes which occur nevertheless when generating mean value addresses are hastened or delayed in small steps and although jitter is caused by these changes, it will lie within permitted limits and cause no problem.

The inventive arrangement adjusts the buffer read-out rate in the absence of troublesome jitter. This is achieved by utilizing the mean value counter in a manner such that the phase error signal from the second phase detector will obtain a relatively smooth pattern in the absence of excessively pronounced jumps. Consequently, the jerks in the read-out rate will be so small that the jitter caused by these jerks will lie within permitted limits.

The invention will now be described in more detail with reference to a preferred exemplifying embodiment thereof and also with reference to the accompanying drawings.

### BRIEF DESCRIPTION OF THE DRAWINGS

Figure 1 illustrates two parts of a plesiochronous digital hierarchy system which coacts with a synchronous digital hierarchy system.

Figure 2 shows information divided in frames in the systems.

Figure 3 illustrates a known technique for writing and reading information into and from a memory respectively.

Figure 4 illustrates an inventive arrangement.

Figure 5 illustrates a cyclic sequence of write addresses.

Figure 6 illustrates a cyclic sequence of read addresses.

Figure 7 is a diagram illustrating generated write addresses and mean value addresses.

Figure 8 illustrates the relationship between mean value addresses, write addresses and front and back limit values.

Figure 9 illustrates in two diagrams the hastened generation of mean value addresses and the delayed generation of mean value addresses.

Figure 10 illustrates in more detail the first phase detector of the inventive arrangement.

Figure 11 is comprised of three diagrams which illustrate respectively mean value addresses, read addresses and stuff limit values.

### BEST MODE OF CARRYING OUT THE INVENTION

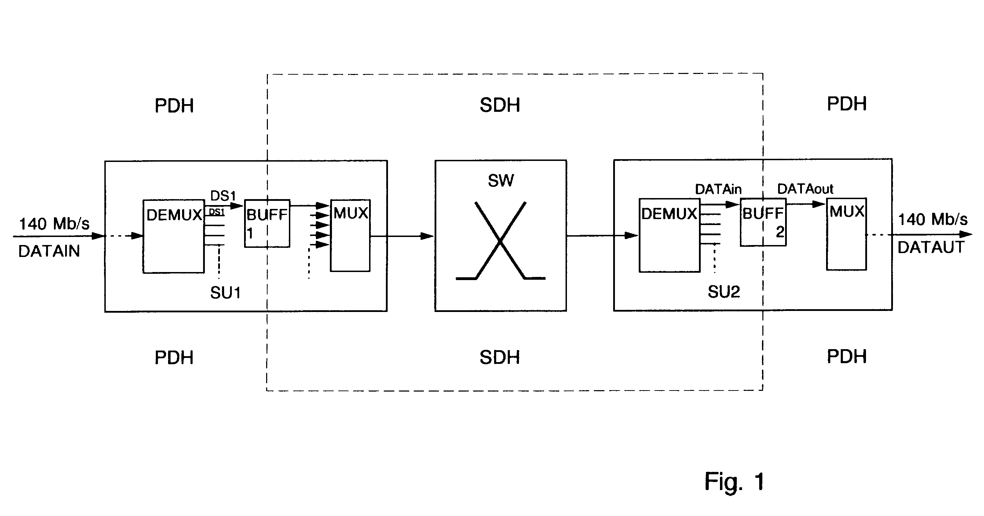

Figure 1 illustrates a so-called digital cross connect system (DCC-system) which includes two parts of a plesiochronous digital hierarchy system (PDH-system) which coacts with a synchronous digital hierarchy system (SDH-system). The DCC-system includes a first synchronizing unit SU1 which is coupled to an input of a cross-connecting unit SW in which signal switching takes place, and a second synchronizing unit SU2 which is coupled to an output of the DCC-unit. Data DATAIN enters the first synchronizing unit SU1 on a transmission line at a transmission rate of 140 Mb/s. Incoming data DATAIN arrives at the synchronizing unit in the PDH-system. Incoming data is demultiplexed in several stages (one demultiplexer DEMUX is shown in the Figure) until it has a bit rate of about 2 Mb/s. These demultiplexed signals are referenced DS1 in the Figure. The rate of the demultiplexed signal may deviate from a bit rate for 2 Mb-signals nominal within telephony. The nominal bit rate is 2.048 Mb/s. The signals must be completely synchronous when they are to be switched in the cross-connecting unit. A so-called bit justification is made in a first buffer BUFF1, so as to equalize the rate differences between the demultiplexed signals DS1 and therewith synchronize the signals. (The arrangement includes 64 buffers, connected in parallel although only one is shown in the Figure). Space is available for one bit justification in each frame of data information entering the buffer, this justification involving the addition of one bit or the removal of one bit to and from the frame. Any deviation in rate will normally always be in the same direction for a given a signal DS1. A rate-generating oscillator will always operate either too fast or too slow (within specified limits). Thus, a bit-addition is always generated in respect of one signal and a bit-subtraction is always generated in respect of another signal. The buffers BUFF1 of the first synchronizing unit SU1 form a junction between the PDH-system and the SDH-system. The bit-adjusted signals from the 64 parallel-coupled buffers are multiplexed in a multiplexer MUX and are then delivered to the cross-connecting unit and switched therein. Subsequent to being switched, the signals are delivered to the second synchronizing unit SU2 in which they are first demultiplexed in a demultiplexer DEMUX so as to obtain the bit rate 2 Mb/s. These signals are designated DATAᵢₙ in the Figure. Extending from the demultiplexer are 64 parallel lines on which these 2 Mb-signals DATAᵢₙ are delivered. Each line is connected to a separate second buffer BUFF2 for transmitting the switched signals to the PDH-system. (Only one buffer BUFF2 is shown in the Figure). The inventive arrangement is comprised of the second buffer BUFF2 in the second synchronizing unit. The second buffers BUFF2 constitute a junction between the SDH-system and the PDH-system. Output signals DATAₒᵤₜ are delivered from the second buffers BUFF2 and are then multiplexed in several stages in multiplexers MUX. Finally, there is delivered from the second synchronizing unit SU2 an output data signal DATAUT having a bit rate of 140 Mb/s.

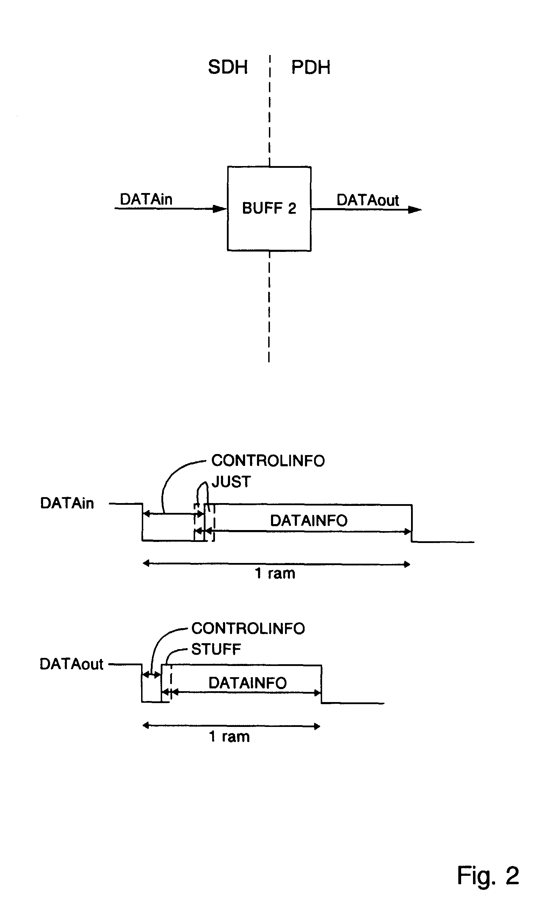

Figure 2 illustrates the buffer BUFF2 of the Figure 1 embodiment, and shows data DATAᵢₙ. incoming to the buffer and data DATAₒᵤₜ outgoing from the buffer. The Figure also shows that the buffer forms a junction between an SDH-system and a PDH-system. Data DATAᵢₙ entering the buffer BUFF2 is divided into frames. Each frame includes a first part which nominally contains 256 (two-hundred fifty-six) bits of data information DATAINFO, and a second part which nominally contains 32 (thirty-two) bits of control information, CONTROLINFO, intended for the transmission messages, e.g. frame-reading words and control bits of different kinds. The 256 bits of data information DATAINFO are written into the buffer. The incoming data signal may contain a bit justification JUST, which may have one of two different forms. In the first case, the data information to be written into the buffer will contain one more bit than its nominal number, i.e. an addition of one adjustment bit JUST, so that 257 bits will be written into the buffer instead of 256 bits. This has been illustrated to the left of the Figure by a broken line, which indicates one extra bit of data information in the frame. In this case, the other part of the frame has one bit less than the nominal number, i.e. contains 31 bits instead of 32 bits. In the second case, the data information contains one bit less than the nominal number of bits, i.e. one bit has been removed so that 255 bits are written into the buffer instead of 256 bits. This has been illustrated in the Figure by the right-hand broken line, which indicates that the frame contains one bit less of data information, but a justification bit JUST instead. The other part of the frame, CONTROLINFO, will then include one bit more than the nominal number, i.e. 33 bits instead of 32 bits.

Outgoing data information DATAₒᵤₜ has another frame format, so as to be able to fit into the PDH-system. Each frame includes a first part which nominally contains 206 (two-hundred six) bits of data information, DATAINFO, which are read-out from the buffer BUFF2, and a second part which nominally contains 6 (six) bits of control information, CONTROLINFO, intended for message transmission, etc. Read-out can be temporarily stopped in order to enable the readout rate from the buffer BUFF2 to be adjusted, wherein the output data DATAₒᵤₜ in the first part of the frame will contain one data information bit fewer than is normal. This is illustrated in the Figure with a broken line, which indicates that the data information part contains 205 bits instead of 206 bits. The bit which is not read-out from the FIFO-register when adjusting the read-out rate forms a so-called stuffbit STUFF.

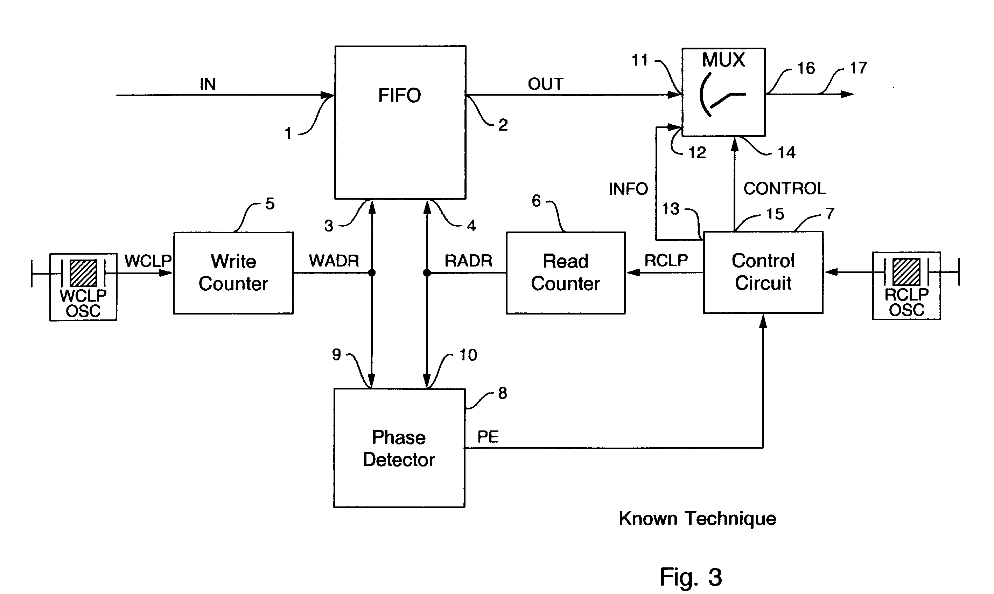

Figure 3 illustrates an addressable memory, FIFO, and shows the use of a known technique for writing data into the memory and reading data therefrom. The memory has an input 1 for incoming data IN, an output 2 for outgoing data OUT, a write address input 3 and a read address input 4. A write address generator, which includes a write clock oscillator WCLPOSC and a write counter 5, is connected to the write address input 3 of the memory. A read address generator, which includes a read clock oscillator RCLPOSC and a read counter 6, is connected to the read address input 4 of the memory. The write counter 5 being incremented with write clock pulses WCLP from the write clock oscillator WCLPOSC and delivers to the memory FIFO a cyclic sequence of write addresses WADR corresponding to its counter content. The read counter 6 is connected to the read oscillator RCLPOSC via a control circuit 7 and being incremented with read clock pulses RCLP delivered by the control circuit from the read clock oscillator. The read counter 6 delivers to the memory a cyclic sequence of read addresses RADR corresponding to the content of the counter. The cyclic sequence of read addresses includes the same addresses as the addresses contained in the cyclic sequence of the write addresses, and in the same order.

An address comparison means in the form of a phase detector 8 is connected for receiving the cyclic sequences of addresses. The phase detector compares the instantaneous addresses in the sequence of write addresses WADR with the simultaneous instant addresses in the sequence of read addresses RADR. It is desirable that the simultaneous addresses on the inputs 9, 10 of the phase detector differ substantially from one another. Ideally, the cyclic sequences of addresses are mutually phase-shifted through one-half cycle. The phase detector 8 determines the difference between the memory write address and the memory read address concerned. When the difference between read address and write address is not sufficiently large, the phase detector sends an error signal PE to the control circuit 8 for controlling counting of read clock pulses RCLP from the read clock oscillator RCLPOSC by the read counter 6. For instance, the read clock oscillator may be set so that the frequency will always be slightly too high, where with a phase error signal PE indicates that the control circuit shall stop one read clock pulse. The generation of read addresses is stopped repeatedly in this way, so that the read-out rate will be temporarily reduced so as to obtain a uniform rate of data write-in.

Figure 3 also illustrates a multiplexer, MUX. The multiplexer has a data input 11 connected to the memory output 2, an information input 12 connected to an information output 13 of the control circuit 7, a control input 14 connected to a control output 15 of the control circuit 7, and an output 16 connected to an outgoing line 17.

A signal CONTROL from the control circuit 7 to the multiplexer MUX controls the multiplexer to receive data information from the FIFO-register when reading data therefrom, and otherwise to receive information bits INFO from the control circuit.

For the reasons mentioned above, an arrangement according to known techniques cannot be used as a buffer at the junction between an SDH-system and a PDH-system. Instead, there is used an arrangement constructed in accordance with the invention.

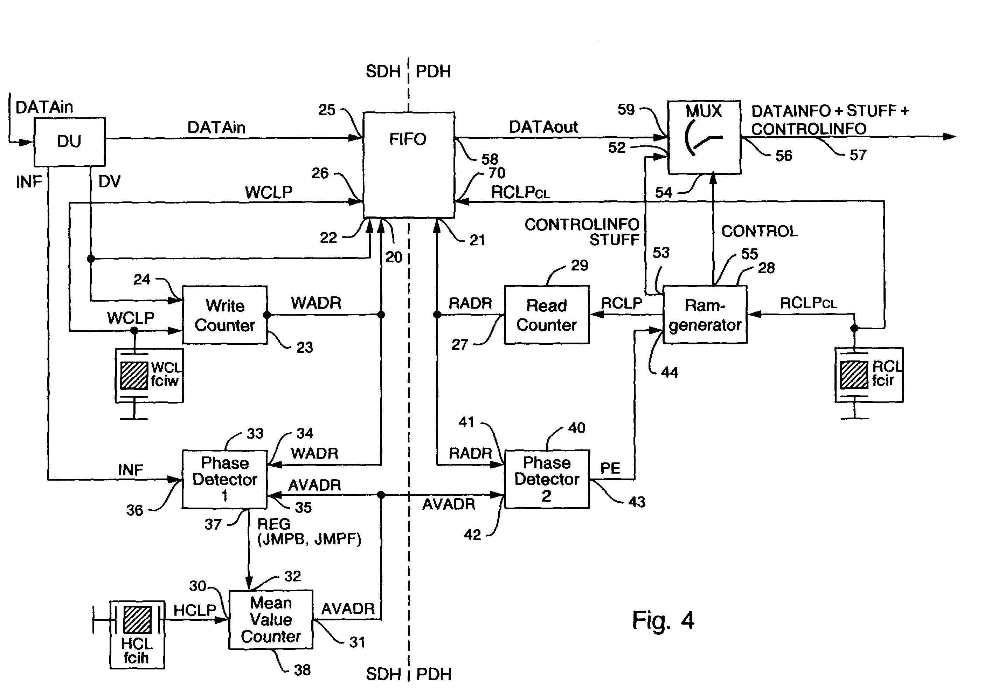

Figure 4 illustrates an embodiment of an arrangement and a method for transmitting information from an SDH-system to a PDH-system in accordance with the invention. In simple terms, the embodiment illustrated in Figure 4 can be said to correspond to one of the second buffers BUFF2 in the second synchronizing unit SU2 of the Figure 1 embodiment and the asynchronous buffer in the Figure 2 embodiment.

The Figure 4 embodiment includes an addressable memory, a write address generator, a read address generator, a mean value address generator, a first address comparison means, second address comparison means, means for detecting frames and frame changes in the SDH-system, and multiplexing means.

The memory, FIFO, has eighty single-bit registers or memory positions, each having a separate address ranging from zero to seventy-nine. Data can be written into the memory in the memory position given by a write address WADR on the write address input 20 of the memory. Data can be read from the memory position given by a read address RADR on the read address input 21 of the memory. The memory also has a write control input 22. The signal on the write control input 22 discloses whether data shall be written-in or not.

The write address generator includes a write clock, WCL, which generates write clock pulses, WCLP, in the form of an equidistant pulse train having a write clock frequency, f_{clw}. The write address generator also includes a write counter 23 in the form of a modulo-80-counter which counts in gray code from zero to seventy-nine and then begins again from zero. The write counter is connected to the write clock for counting write clock pulses WCLP, and is also connected to the memory write address input 20 for generating a cyclic sequence of memory write addresses WADR in accordance with the content of the counter. The write counter has a control input 24 which is connected to a detecting means DU for receiving a write control signal DV which indicates whether the content of the write counter shall be changed in keeping with the incoming write clock pulses WCLP or whether the content of said counter shall remain unchanged irrespective of the incoming write clock pulses WCLP.

The read address generator includes a read clock RCL, a frame generator 28 and a read counter 29. The read clock generates read clock pulses, RCLP_{CL}, in the form of an equidistant pulse train having a read clock frequency, f_{clr}. The read counter has the form of a 7-bit gray-coded modulo-80-counter, which counts cyclically from zero to seventy-nine and then begins again from zero. The read counter has an output 27 connected to the read address input 21 of the memory for generating a cyclic sequence of read addresses RADR to the memory in accordance with the content of the counter. The read counter 29 is connected via the frame generator 28 to the read clock RCL for receiving and counting the write clock pulses RCLP which are passed on by the frame generator from the write clock.

The mean value address generator includes a high frequency clock HCL, which generates high clock pulses HCLP in the form of an equidistant pulse train having a high clock frequency f_{clh}. The mean value address generator also includes a mean value counter 38. The mean value counter includes a four-bit binary-coded modulo-10-counter and a seven-bit gray-coded modulo-80-counter. The mean value counter has a pulse input 30 connected to the high frequency clock HCL for receiving high clock pulses HCLP, and a mean value address output 31 for generating a cyclic sequence of mean value addresses AVADR in accordance with the content of the modulo-80-counter.

The mean value counter also has a control input 32 for receiving counter-hastening or counter-delaying control signals REG. When a counter-hastening signal is applied to the control input, the modulo-10-counter counts forwards two steps with each received high clock pulse. When a counter-delaying signal is applied to the control input, the modulo-10-counter does not count forwards when receiving a high clock pulse. When neither a counter-hastening or counter-delaying signal is present on the control input on the mean value counter, the modulo-10-counter counts forwards one step with each high clock pulse received. The modulo-80-counter is connected to the modulo-10-counter such that the content of the modulo-80-counter is stepped forwards one step each time the modulo-10-counter has counted through one revolution, i.e. ten steps.

The first address comparison means includes a first phase detector 33 having a first address input 34, a second address input 35, a control input 36 and a control output 37. The first address input 34 is connected to the address output of the write counter, whereas the second address input 35 is connected to the address output 31 of the mean value counter. The control input 36 of the phase detector 33 is connected to the detecting means DU for receiving information, INF, concerning changes in frames in the synchronous system caused by bit justification. The control output 37 of the phase detector is connected to the control input 32 of the mean value counter.

The first address comparison means is constructed to compare the addresses on their respective address inputs 34, 35 and determined address limit values. When the instantaneous addresses in the cyclic sequence of addresses on the first address input lie so far behind, i.e. are so much smaller than the simultaneous addresses in the cyclic sequence of addresses on the second address input that the difference at least coincides with a bottom, i.e. back, address limit value, the first address comparison means produces a delay signal JMPB on its control output 37. When instant addresses in the cyclic sequence of addresses on the first address input lie so much further, i.e. the addresses are so much larger than simultaneous addresses in the cyclic sequence of addresses on the second address input that the difference at least coincides with a front please check, i.e. an upper, address limit value, the first address comparison means produces an hastening signal JMPF on its control output. Thus, the first address comparison means is so constructed and so connected to the write counter and the mean value counter that it strives to maintain the difference between the instant and simultaneous addresses within the address limit values, i.e. to maintain the phase positions between the cyclic sequences of write addresses and mean value addresses.

The second address comparison means includes a second phase detector 40 having a first address input 41, a second address input 42 and a control output 43. The first address input 41 is connected to the address output 27 of the read counter, whereas the second address input is connected to the address output 31 of the mean value counter. The control output 43 of the phase detector is connected to an input 44 of the frame generator 28 of the read address generator.

The second address comparison means is constructed to compare the instant simultaneous addresses on its address inputs 41, 42 and a given read address limit value, a so-called stuff limit value.

When the instant addresses in the cyclic sequence of addresses on the first address input lie so much further, are so much greater than the simultaneous, instant addresses in the cyclic sequence of addresses on the second address input that the difference at least coincides with a so-called stuff limit value, the second address comparison means will produce on its control output 43 a phase error signal comprised of a delay signal PE. The delay signal influences the frame generator in a manner such that the generator will prevent a read clock pulse from the read clock from arriving at the read counter, thereby delaying the generation of subsequent read addresses.

The Figure 4 embodiment also includes a multiplexer, MUX. The multiplexer has an information input 52 connected to an information output 53 of the frame generator 28, a control input 54 connected to a control output 55 of the frame generator 28, and an output 56 connected to an outgoing line 57.

A signal CONTROL sent from the frame generator 28 to the multiplexer MUX causes the multiplexer to receive control information bits CONTROLINFO and stuff bits STUFF from the frame generator when no data is read-out from the addressable memory FIFO.

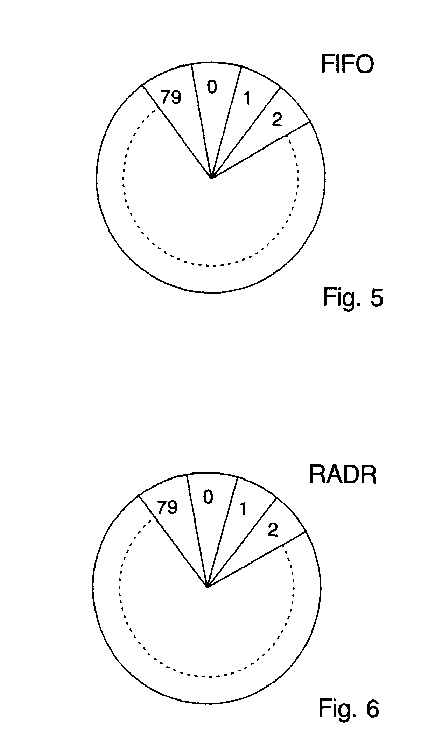

The devices illustrated in Figure 4 have the following functions. Data is written into the FIFO-register serially, i.e. the first bit is written into memory position zero, the second bit is written into memory position one, and so on. Subsequent to a bit having been written into memory position seventy-nine, the whole procedure is repeated, with a bit being written into memory position zero. The FIFO-register can therefore be seen as a circular loop, as illustrated in Figure 5. This can be compared with read addresses RADR, write addresses WADR and mean value addresses AVADR being generated cyclically.

Data DATAᵢₙ incoming to the FIFO-register 1 is divided into frames in accordance with Figure 2 and associated text. The first part of the frame, containing data information DATAINFO, is written into the FIFO-register on a data input 25. When writing data information into the FIFO-register, the write address WADR is given on the output of the write counter 23. Connected to the write counter and to the FIFO-register is a write control signal DV which is high when data information enters the FIFO-register and low when transmission messages arrive. (These messages shall never be written into the FIFO-register). Thus, the working cycle of the write control signal DV follows the incoming data signal DATAᵢₙ with optional addition or subtraction of justification bits. The write control signal DV (Data Valid) is thus high when data is available to be written-in, and is low in other cases. The write control signal DV is used to cause the write counter to temporarily stop counting forward write addresses when the signal is low. As before mentioned, incoming data DATAᵢₙ is divided into frames. The write counter is stepped up one address with each write clock pulse WCLP during the first part of the frame when the write control signal DV is high, wherein data information is written into the FIFO-register. During the second part of the frame, on the other hand, where the write control signal DV is low, the write counter 23 is stopped so that information present in said second part of the frame will not be written into the FIFO-register. During the first part of the frame where data information shall be written-in, the write counter is connected with the aid of the write control signal DV, whereas the write counter is disconnected during the second part of the frame where data information shall not be written-in. The write control signal DV is also connected to an input on the FIFO-register, so that data will only be written-in in the presence of a high control signal. No data will be written-in in the presence of a low control signal. The write clock pulses WCLP produced by the write clock WCL are connected to a clock pulse input 26 for synchronizing the writing of data information into the FIFO-register with the generation of write addresses WADR. The write clock frequency f_{clw} is higher than a nominal write frequency (f_{clw})ₙₒₘ in the system, since data is only written-in during a first part of each frame. However, the rate at which data is written-in when distributed over the entire frame is corresponded by the nominal write clock frequency (f_{clw})ₙₒₘ of the system. By the nominal frequency of the system is meant the nominal frequency within the telephony for 2 Mb-signals.

The write control signal DV is generated in a detection unit DU through which the incoming data signal DATAᵢₙ passes. The detection unit detects from the incoming data signal whether or not a bit justification has been made, and delivers a high write control signal DV when incoming data DATAᵢₙ is comprised of information which is to be written into the FIFO-register, and is otherwise low.

The FIFO-register forms a boundary between the earlier mentioned SDH-system (Synchronous Digital Hierarchy) and the PDH-system (Plesiochronous Digital Hierarchy), so that said addition or subtraction of bits is detected in the SDH-system on the write side of the FIFO-register, whereas subsequent adjustment of the read-out rate is effected in the PDH-system.

Outgoing data DATAₒᵤₜ is read from the FIFO-register serially and bitwise. Output data DATAₒᵤₜ is read-out framewise to the PDH-system. As previously described, outgoing data has a different frame format compared to incoming data DATAᵢₙ. Each frame namely includes 212 (twohundredandtwelve) bits, of which 206 (twohundredandsix) are comprised of data information DATAINFO which is read from the FIFO-register on a data output 58. The remaining six bits are comprised of control information and control bits which never pass the FIFO-register. The control signal CONTROL causes the multiplexer MUX to receive data information from the FIFO-register on a data input 59. When reading-out data, the read address RADR is given on the output 27 of the read counter 29, this output being connected to the FIFO-register. The read clock pulses RCLP_{CL} are generated at a read clock frequency f_{clr} which is slightly higher than the nominal write clock frequency (f_{clw})ₙₒₘ. This means that the read-out of data must be repeatedly stopped for the duration of one read clock pulse, in order to maintain a read-out rate which is uniform to the write-in rate. The frame generator is therefore able to temporarily stop the generation of read clock pulses to the read counter, so as to cause an interruption in the read clock pulses RCLP during which the read counter will not generate a new address for read-out. Thus, the frame generator delivers read clock pulses RCLP with incorporated interruptions in order to stop read-out. The frame generator also creates an interruption in the read clock pulses RCLP during the 6 bits in the frame where no information is read-out from the FIFO-register. Similar to the write counter, the read counter counts from zero to seventy-nine and then begins to count from zero again. The write addresses RADR are thus generated in a cyclic sequence, as illustrated in Figure 6. The writing of data into the FIFO-register and the reading of data therefrom thus takes places serially, although it is necessary to read data into and to read data from different memory positions at one and the same time, in order to avoid the occurrence of errors. The read clock pulses RCLP_{CL} from the read clock RCL are connected to a clock pulse input 70 for synchronizing read-out from the FIFO-register with the generation of read addresses RADR.

In order to avoid jitter on the output of the FIFO-register when adjusting rate on the PDH-side because incoming data DATAᵢₙ contains a bit addition or bit subtraction (bit justification), there is used in accordance with the invention the aforesaid mean value counter 38 which counts forwards at the high frequency pulses HCLP generated in a high frequency clock HCL which operates with a frequency f_{clh} which is n times higher than the nominal frequency (f_{clw})ₙₒₘ of the write clock. In the preferred embodiment, n is equal to 10 (n=10). The mean value counter generates mean value addresses which constitute the mean values of the write addresses. One purpose of the invention is to utilize the mean value counter in rate justification on the PDH-side, in order to avoid problems with jitter on the PDH-side.

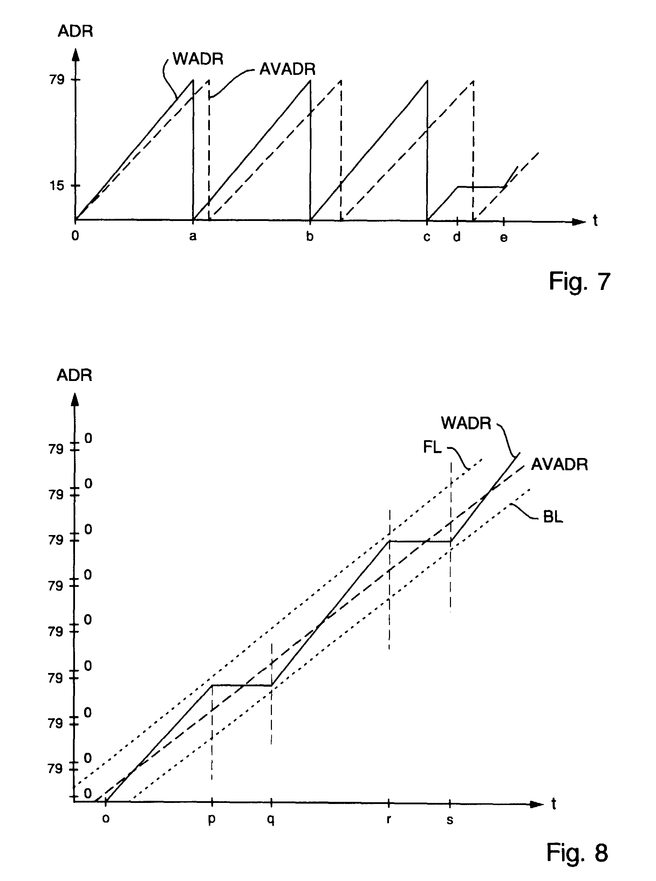

The mean value counter 38 generates on its address output 31 mean value addresses AVADR which, on average, correspond to the write addresses WADR. This is because the modulo-80-counter in the mean value counter continuously counts forwards in keeping with the nominal write clock frequency, whereas the write counter, which pauses with each frame, will only, on average, count in keeping with the nominal write clock frequency. The generated write addresses WADR thus pendulate around the generated mean value addresses AVADR, since the write-in of data is stopped during a second part of each frame. Figures 7 and 8 are diagrammatic illustrations of generated write addresses WADR and mean value addresses AVADR which are intended to show how the write addresses pendulate around the mean value addresses. The vertical axis of the diagram shows the generated addresses ADR, whereas the horizontal axis shows the time t. The diagram does not show each new generated address separately, and the address transitions are shown analogously. The time between zero and e of the time points is corresponded by an incoming data frame DATAᵢₙ. The addresses zero up to and including seventy-nine are generated between the time point zero and the time point a, by eighty write clock pulses WCLP. This procedure is repeated cyclically between the times a and b and between the times b and c. At time point d, 256 write clock pulses WCLP have been delivered to the write counter 23, which has counted forward new addresses in eighty-cycles and the generated write address WADR is fifteen. No new write addresses are generated between the time points d and e, since no data information enters the FIFO-register. The Figure also illustrates generated mean value addresses AVADR with a broken line. These mean value addresses are generated more slowly, although continuously instead. As previously mentioned, the write addresses therefore pendulate the mean value addresses, and the write addresses correspond, on average, to the mean value addresses. The Figure illustrates write addresses which have been generated when no bit justification is present. In order to illustrate this more clearly, Figure 8 shows the relationship between write addresses and mean value addresses over a period of time corresponding to several frames of incoming data. The diagram is also drawn so that those curves which illustrate the generated addresses contain no discontinuities. Accordingly, the vertical axis shows more mutually sequential cycles of addresses ADR. The horizontal axis shows time t and has a different scale to the time axis in Figure 7. The write addresses WADR have been illustrated with the full line and the mean value addresses AVADR with the broken line. The time between the time points o and q corresponds to a frame of incoming data, and the time lapse between the time points q and s also corresponds to a data frame. Write addresses are generated between the time point o and p, no write addresses are generated between the time points p and q. During the next following frame, write addresses are generated between the time points q and r, while a pause in generation is made between the time points r and s. It will be seen from the Figure that the write addresses WADR pendulate about the mean value address AVADR. The Figure shows only write addresses which have been generated in the absence of bit justification.

It will be seen from Figures 7 and 8 that the generated write addresses WADR differ from the generated mean value addresses AVADR in a pendulating fashion. However, this deviation is limited provided that no bit justification exists, i.e. provided that the deviation lies within a front and a back limit FL, BL. On the other hand, in the presence of bit justifications, the generated write addresses will deviate from the mean value address outside these limits. According to the inventive method, the mean value addresses shall constantly constitute the mean values of the write addresses, and if the write addresses deviate excessively from the mean value addresses as a result of bit justification, it is necessary to adjust the mean value counter so that the write addresses will again pendulate around the mean value addresses within the front and the back limits. In order to be able to check whether or not the write addresses lie within the front and the back limits, a forward and a back address limit value is calculated for each mean value address. These address limit values are then used for comparison with generated write addresses. According to the present invention, the aforesaid comparison of the address limits with the write addresses is effected with the aid of said first phase detector 33, in which a check is carried out to establish whether a generated write address is within permitted limits in relation to the simultaneously generated mean value address.

A front address limit FL and a back address limit BL, which form limits for the generated write address, are stored in the first phase detector 33 for each mean value address generated by the mean value counter. Thus, a front address limit and a back address limit are connected to respective mean value addresses. When the mean counter 38 generates the mean value address zero, the front address limit of the write address will be twenty-one, whereas the back address limit will be fifty-seven. The back and the front address limits are calculated on the basis of the working cycle of the incoming data signal DATAᵢₙ. Since the write counter will not generate write addresses over a time period which corresponds to thirty-two bits, while the mean counter will continuously generate mean addresses, the generated write addresses will vary around the mean addresses by about thirty-two addresses, although, on average, the write addresses will correspond to the generated mean value addresses. The variation in the write address will thus be about sixteen addresses in either direction from the mean value address. As a result of bit justification on the synchronous side (SDH-side), in the form of a bit addition or bit subtraction, the generated write addresses will deviate further from the generated mean value addresses. The limit to which extent the write address can be permitted to deviate from the mean value address can be set generally to somewhere above sixteen addresses without risk of the writing and reading of data colliding in a memory position in the FIFO-register. For instance, the deviation can be permitted to be twenty-one positions in respect of the front limit value and twenty-three positions in respect of the back limit value. In the case of the mean value address zero (0), the front address limit is calculated to twenty-one (21) and the back address limit to fifty-seven (57), whereas in the case of the mean value address one (1), the front address limit is calculated to twenty-two (22) and the back address limit is calculated to fifty-eight (58), and so on. These values are shown in dotted lines in Figure 8. The front limits are referenced FL (Front Limit) and the back limits are referenced BL (Back Limit).

The first input 34 of the first phase detector 33 is connected to the output of the write counter 23 for detecting generated write addresses WADR, and a second input 35 is connected to the output 31 of the mean value counter for detecting generated mean value addresses AVADR. The first phase detector 33 also has a control output 37 which is connected to a second input 32 on said mean value counter 38, for adjusting the mean value counter when the generated write address takes one of the limit values in the comparison made in the first phase detector 33. When adjusting the mean value counter, a regulating signal REG is delivered from the first phase detector, this signal either giving a front regulating signal JMPF or a back regulating signal JMPB.

The detected write address is compared in the first phase detector with the front and back limit values calculated for the simultaneously detected mean value address. When the write address is equal to the front limit value, the regulating signal REG is a front regulating signal (hastening signal) JMPF. This front regulating signal causes the mean value counter to step forward an additional mean value address over n number of steps. This is effected by hastening in the mean value counter the generation of mean value addresses in the modulo-80-counter. This hastening of the generation of a new mean value address is effected in ten steps (n=10), wherein for each step the modulo-10-counter in the mean value counter counts forward two positions during one high clock pulse HCLP instead of one position, which is the normal case when no regulating signal exists on the output of the first phase detector. On the other hand, if the detected write address is found to be equal to the back limit value when making said comparison, the regulating signal REG is a back regulating signal (delay signal) JMPB. The back regulating signal indicates that the mean value counter shall count forward one mean value address fewer than when no regulating signal exists over ten steps. This "reversal" is effected in ten steps, wherewith the modulo-10-counter is stopped by a high clock pulse HCLP for each step, i.e. the modulo-10-counter counts forward zero (0) positions during the aforesaid n number of steps. Regulation for adjustment of the mean value counter in n number of steps is prolonged for as long as possible. Under normal conditions, when no regulating signal is present, the modulo-10-counter counts forward one (1) step for each high clock pulse HCLP.

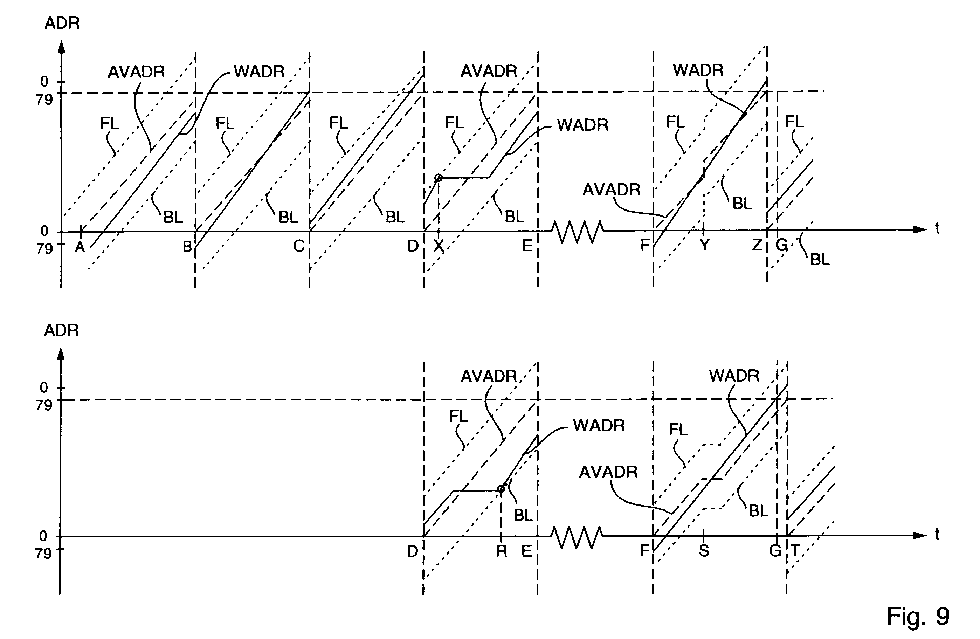

Figure 9 illustrates how the generation of mean value addresses AVADR is hastened when the regulating signal REG is comprised of a front regulating signal. Figure 9 also illustrates how generation of mean value addresses is delayed when the regulating signal REG is comprised of a back regulating signal. The upper diagram illustrates hastening of the generation of mean value addresses. The horizontal axis of the diagram shows time t and the vertical axis of the diagram shows generated addresses ADR. Generated mean value addresses AVADR are illustrated in broken lines and the write addresses WADR are illustrated in full lines. The front and back limit values FL, BL are shown in dotted lines. The time distance between the time point A and B, B and C, and between C and D is constant and corresponds to eighty write clock pulses. The mean value counter generates eighty mean value addresses during this time period. The generated write addresses vary within the front and the back address limit value FL, BL between the time points A and B, although at the time point X, in the next time interval between the time points D and E, the write address is equal to the front address limit value (WADR=FL) as a result of bit justification. As before described, the mean value counter is stepped forward an additional mean value address in 10 steps. An adjustment to the generation of the mean value addresses AVADR in one step is illustrated in the same diagram. The time interval between the time points F and G corresponds to eighty write clock pulses similar to the other intervals in the diagram. It is shown at time point Y that the mean value counter generates the next mean value address in a shorter time than normal, since the modulo-10-counter then momentarily counts forward two positions instead of one position, therewith hastening the generation of the next mean value address. The generation of the next mean value address is thus hastened at time point Y in a first step. A further nine hastening operations are then carried out, these operations being distributed over a time period which is dependent on how often bit justifications occur. These further nine hastening operations are not shown in the diagram. Since the generation of mean value addresses is hastened, the mean value address seventy-nine (79) will be generated earlier than when hastening does not occur. It will be seen from the diagram that the mean value address seventy-nine (79) is generated at the earlier time point Z instead of at time point G, due to a step in the hastening process. The diagram is not true to scale. Adjustment of the mean value address AVADR at the time point Y has been exaggerated for the sake of illustration. The diagram also shows the front and the back limit values FL, BL and how these values vary with the mean value address AVADR.

The lower diagram in Figure 9 illustrates a delay in the generation of mean value addresses. This delay is effected as a result of an earlier effected bit justification comprising the removal of one bit. This diagram does not show addresses generated in the interval prior to the time interval D-E. It will be seen that at time point R in the time interval between time points D and E, the generated write address is equal to the back address limit value (WADR=BL). The following adjustment to the mean value counter is carried out in a later time interval, at time point S between the time points F and G. One-tenth of the full adjustment of the mean value counter is effected at time point S. This adjustment is achieved by delaying forward counting of the modulo-10-counter. This delay is effected by stopping the modulo-10-counter over a period of one high clock pulse HCLP, so that it will take one clock pulse HCLP longer time to cause the mean value counter to generate the next address. In order to illustrate this, the line representing the mean value addresses has been drawn horizontally in the diagram at the time point S, when the modulo-10-counter does not count forwards. As a result of this delay, the mean value address seventy-nine (79) is generated at the later time point T instead of at time point G, which would normally be the case when no adjustment is made to the mean value counter.

As a result of the adjustments made to the mean value counter and described with reference to Figure 9, the generation of mean value addresses is delayed or hastened so as to follow those changes in the generation of write addresses which result from bit justifications.

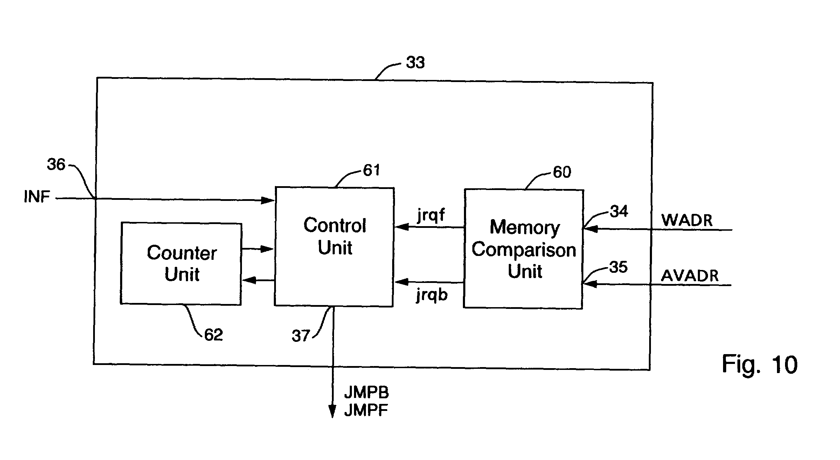

Figure 10 illustrates the first phase detector 33 in more detail. The phase detector includes a memory and comparison unit 60 which is connected to the first and the second input 34, 35 for detection of said write address WADR and mean value address AVADR. The front and the back address limit values are stored in the memory and comparison unit 60 and the detected write address is compared in said unit with the front and the back address limit value which is applicable to the simultaneously detected mean value address. When the write address WADR is identical to the front address limit value FL, the memory and comparison unit 60 sends a first signal jrqf (jump request forward) to a control unit 61 in the phase detector. On the other hand, when the write address is identical to the back address limit value BL, the memory and comparison unit 60 will, instead, send a second signal jrqb (jump request backward) to the control unit 61. In order to reduce jitter caused by said bit justification on the write side for as long as possible, the aforedescribed incremental adjustment is made with the greatest possible spacing between the steps, i.e. the time interval between each incremental adjustment of the mean value counter shall be as long as possible. This is achieved by sending from the detection unit DU (see Figure 2) to the control unit 61 in the first phase detector 33 information concerning the addition or removal of a justification bit when writing data into the FIFO-register. This information has the form of a pulse INF on the control input 36 when adding or removing a justification bit. The time interval between the two latest pulses INF is measured in the control unit 61 and the appropriate time lapse between each step when adjusting the mean value counter is calculated in the control unit on the basis of the measured time interval between said two latest pulses INF. The time between each step is calculated as 1/n:th of the time between the two latest justification bits, this time interval being one-tenth in the case of the illustrated example. When the control unit receives a first signal jrqf requesting forward adjustment of the mean value counter, or a second signal jrqb requesting backward adjustment of said counter, the time between the adjustment steps is calculated in the aforedescribed manner. A calculating unit 62 connected to the control unit 61, is set in accordance with the calculated time, so as to control the time between the steps in the incremental adjustment of the mean value counter. The control unit 61 sends the forward adjustment signal JMPF to the mean value counter when said counter is to be adjusted forwards. The forwards adjustment signal includes ten pulses which are delivered at intervals controlled by the aforesaid counting unit. Correspondingly, the control unit sends the backward adjustment signal JMPB to adjust the mean value counter backwards. The forward adjustment and backward adjustment signals JMPF, JMPB are produced on the output 37 of the first phase detector 33.

As before mentioned, in order to finally synchronize the read-out rate with the read-in rate, it is necessary to repeatedly stop the read clock pulses RCLP_{CL} (see Figure 4) generated in the read clock RCL through one read clock pulse, so-called stuffing. For the purpose of controlling these stuffing operations, the inventive arrangement includes, in addition to the mean value counter and the first phase detector, the aforesaid second phase detector 40, which has a first input 41 connected to the output of the read counter for detecting read addresses RADR, and a second input 42 which is connected to the output of the mean value counter for detecting mean value addresses AVADR, and an output 43 which is connected to the frame generator 28 for carrying out the stuffing operations.

In order to determine when stuffing shall take place, a so-called stuffing limit value or read address limit value is calculated for each mean value address and stored in a memory and comparison unit in the second phase detector. The stuffing limit value is an address in the FIFO-register from which read-out may not take place. The read-out rate is then too high and there is a risk that read-out and write-in will take place at one and the same address in the FIFO-register.

The stuffing limit values are calculated on the basis that read-out from the FIFO-register will take place at a memory position which is located as far as possible from the memory position in which data is written into the register. The mean value counter generates an address which constitutes a mean value of the address generated by the write counter. Since read-out shall take place as far away as possible from the write-in position, and since the FIFO-register includes eighty memory positions, the risk of writing data into and reading data from one and the same memory position is avoided when the stuffing limit value is calculated as the mean value address plus forty-one (41). When the mean value address is zero (0), the stuffing limit value is calculated to be forty-one (41), while when the mean value address is one (1), the stuffing limit value is calculated to be forty-two (42), and so on. The stuffing limit value may optionally be moved forwards a further one or two addresses, without risk of data being written into and read from one and the same memory position in the FIFO-register. In order to determine whether or not stuffing shall take place, the detected read address RADR is compared in the second phase detector with the stuffing limit value which is associated with the simultaneously detected mean value address AVADR. When the comparison shows agreement between the read address and the stuffing limit value, the read-out rate is too high and the second phase detector will produce a phase error signal PE on its output. The phase error signal PE has the form of a pulse which is sent to the frame generator. Stuffing can be effected in each frame of outgoing data DATAₒᵤₜ on a determined occasion (see Figure 2). When the frame generator receives a phase error signal PE, stuffing is carried out on the first available occasion. When performing a stuffing operation, a read clock pulse RCLP from the read clock RCL is stopped in the frame generator whereby the read counter will not count forwards, but will remain stationary over a length of time which corresponds to the duration of one read clock pulse. The phase error signal PE may also be referred to as a delay signal, since read-out of data information DATAINFO from the FIFO-register is delayed by stopping read-out for the duration of one clock pulse. Instead, the frame generator 28 produces a stuffing bit STUFF which is delivered from the buffer via the multiplexer MUX together with outgoing data DATAₒᵤₜ. The multiplexer is controlled by a control signal CONTROL sent to the multiplexer from the frame generator. The read-out rate from the FIFO-register is reduced by stopping read-out from the FIFO-register and, instead, inserting a stuffing bit into the outgoing data flow, in the aforedescribed manner.

As mentioned earlier, each frame of outgoing data DATAₒᵤₜ includes six bits which cannot be read from the FIFO-register. This means that the frame generator will not generate read clock pulses RCLP during these pauses in read-out. This pause or interruption corresponds to six bits, which means that the read addresses will also move relative to the mean value addresses. During the pause or interruption, the frame generator 28 produces control information bits CONTROLINFO which are delivered from the buffer via multiplexer MUX, together with outgoing data DATAₒᵤₜ. These information bits may, for instance, be frame-locking words and stuffing-control bits. The multiplexer MUX is controlled by a control signal CONTROL sent to said multiplexer from the frame generator 10.

The multiplexer MUX delivers on the outgoing line 57 data information DATAINFO from the FIFO-register together with stuffing bits STUFF and control information bits CONTROLINFO from the frame generator 28.

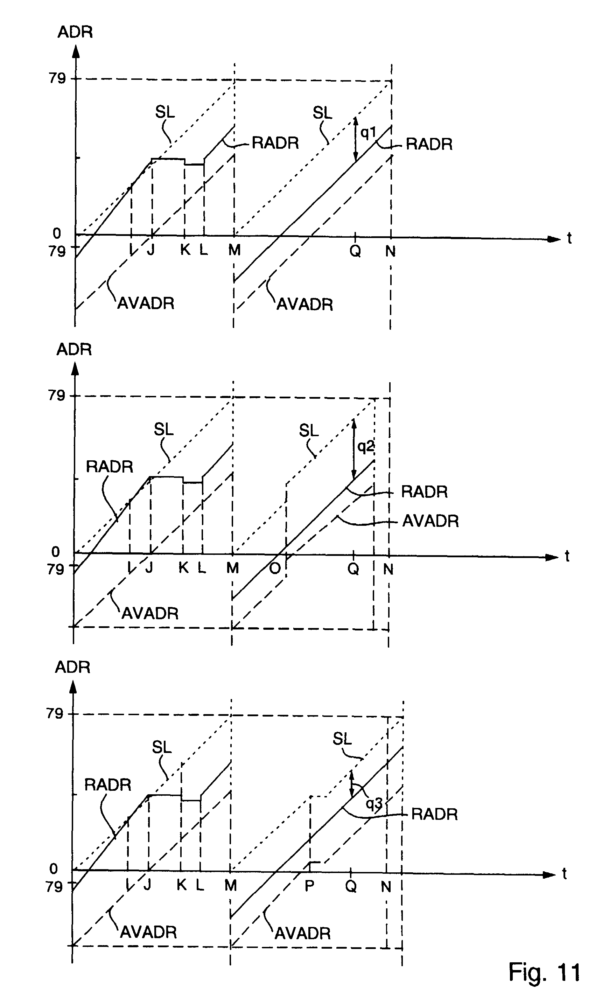

Figure 11 is comprised of three diagrams which illustrate the relationship between generated mean value addresses, stuffing limit values and generated read addresses. The horizontal axes show time t while the vertical axes show addresses ADR. The time interval between respective time points O and M, and between M and N, correspond to the time taken to generate 800 high clock pulses HCLP (which correspond to the time taken to generate 80 mean value addresses when no adjustment is made to the mean value counter). The broken lines indicate mean value addresses AVADR, the full lines indicate read addresses RADR and the dotted lines indicate stuffing limit values SL. No adjustment to the mean value counter is made in the upper diagram, and the mean value addresses AVADR are therewith generated continuously. So-called stuffing is illustrated in the first part of the diagram, between the time points O and M. At time point I, the generated read address is equivalent to the stuffing limit value (RADR=SL) and a phase error signal PE is sent to the frame generator (see Figure 4). No new read addresses are generated between the time points J and K, since the frame generator instead delivers control information CONTROLINFO (see Figure 2). In response to the phase error signal PE at time point I, a stuffing bit STUFF is generated in the frame generator at time point K, so that no new read address will be generated between the time points K and L, this time period corresponding to a read clock pulse RCLP. So-called stuffing is carried out. The STUFF-bit is lowered somewhat in the diagram. The frequency of the read clock pulses is such that stuffing will be effected roughly once with each alternate frame where no bit justification results in the adjustment of the mean value counter. The generated read addresses RADR thus vary only slightly beneath the stuffing limit value and the read address is equivalent to the stuffing limit value roughly once with each alternate frame of outgoing data DATAₒᵤₜ. The second part of the diagram (between the time points M and N) illustrates the relationship between the different lines where no adjustment is made to the mean value counter. At time point Q, the distance between the generated read address RADR and the STUFF-limit value SL is equal to q₁ addresses ADR.

The centre diagram illustrates forward adjustment of the mean value counter, i.e an adjustment which hastens the generation of mean value addresses. The diagram is similar to the upper diagram up to the time point M, with a STUFF-bit inserted between the time points K and L. The generation of mean value addresses AVADR is hastened at time point O, wherewith the lines for mean value addresses AVADR and the stuffing limit values SL are displaced upwards in the diagram. A cycle of mean value addresses (eighty in number) is then generated in a shorter period of time than when no hastening takes place, as described in the aforegoing with reference to Figure 9. At time point Q, the distance between the generated read addresses RADR and the stuffing limit value SL is equal to q₂ addresses ADR. Because of this hastening in the generation of mean value addresses, the distance q₂ is greater than the distance q₁, which illustrates that a longer time will lapse until the next stuffing need be carried out in comparison with the time of the next stuffing illustrated in the upper diagram. It will be seen from the Figure that the generated read addresses RADR will approach the stuffing limit value SL more slowly than in the case illustrated in the upper diagram. Thus, stuffing occurs more seldomly when hastening the generation of mean value addresses.

The bottom diagram in Figure 11 illustrates backward adjustment of the mean value counter, i.e. generation of mean value addresses is delayed. The diagram is similar to the upper diagram up to time point M, with a STUFF-bit inserted between the time points K and L. A delay in the generation of mean value addresses AVADR is effected at time point P, the lines representing mean value addresses AVADR and stuffing limit values SL being displaced downwards in the diagram. A cycle of mean value addresses (eighty in number) is then generated over a longer period of time than when no delay occurs, as described above with reference to Figure 9. At time point Q, the distance between generated read addresses RADR and the stuffing limit value SL is equal to q₃ addresses ADR. Because of the delay, the distance q₃ is shorter than the distance q₁, which illustrates that it takes a shorter time before the next stuffing needs to be effected, as compared with the time to the next stuffing in the upper diagram. It will be seen from the Figure that the generated read addresses RADR will approach the stuffing limit value SL more quickly than in the upper diagram. Thus, stuffing occurs more often in conjunction with delaying the generation of mean value addresses.

The write counter 23, the read counter 29 and the mean value counter 38 are all constructed with modulo-80-counters which utilize gray code when counting forwards. Gray code is used so that only one bit is changed with each forward count, thereby reducing the risk of forward counting errors. However, it is conceivable to use other types of codes, for instance a normal binary code.

In practice, gray code is used solely for the mean value counters, such that when comparing addresses which are generated in two counters at least one counter will utilize the gray code. In the preferred embodiment of the invention, no direct comparison is made between, for instance, mean value address and read address.

The comparison is made between each mean value address stored in the phase detector memory and the detected mean value address, and between a stuffing limit value belonging to the detected mean value address and detected read adress.

It is also conceivable to compare the detected mean value address with the detected read address and to calculate the difference therebetween. Stuffing is carried out when the difference obtained exceeds a predetermined value. Similarly, the difference between detected mean value addresses and write addresses can be determined and a decision made on the basis of the difference obtained as to whether it is necessary to hasten or to delay the generation of mean value addresses.

It can be added that in the case of the exemplifying embodiment, bit justification is carried out not more often than each eighth frame. Bit justification can be effected more seldomly, or not at all, when the frequency of incoming data corresponds to the nominal frequency of the system. Highest permitted frequency deviations according to specifications for a signal in the described system will result in bit justification of each eighth frame. Incremental delay or incremental hastening of the mean value counter then takes place at each eighth frame at the most.

## Claims

1. A method relating to writing data into and reading data from an addressable memory (FIFO), comprising generating successively a cyclic sequence of write addresses (WADR), wherein data (DATAᵢₙ) is written into memory positions in the memory denoted by the write addresses, wherein there is generated a cyclic sequence of read addresses (RADR), wherein the sequence of read addresses includes the same memory addresses as the memory addresses that are contained in the cyclic sequence of write addresses and in the same order as said memory addresses, and wherein information (DATAₒᵤₜ) is read-out from memory positions denoted by the read addresses, **characterized** by forming a cyclic sequence of mean value addresses (AVADR) which includes the same memory addresses as the write addresses and the read addresses and in the same order; establishing front and back write address limit values (FL, BL) for acceptable differences between a write address and a simultaneous mean value address; comparing the write addresses momentarily with the simultaneous mean value addresses or with addresses that have been obtained from the mean value addresses with the aid of the write address limit values; hastening or delaying the generation of subsequent mean value addresses when a momentary write address differs from a simultaneous mean value address at least to an extent such as to correspond to an established write address limit value, so as to decrease the difference between the write addresses and the simultaneous mean value addresses; dividing the hastening or delay processes into a number of steps by shortening or extending the time between the generation of some pairs of mutually sequential mean value addresses; establishing a read address limit value (SL); comparing the read addresses momentarily with the simultaneous mean value addresses or with addresses that have been obtained from the mean value addresses with the aid of the read address limit value; delaying the generation of a read address when a momentary read address differs from a simultaneous mean value address, at least to an extent such as to correspond to the established read address limit value; and by generating a cycle of read addresses over a shorter time period than a cycle of read addresses when the generation of said read addresses is not delayed.

2. A method according to claim 1, **characterized** in being implemented in a system in which the addressable memory (FIFO) is used for transmitting data from a synchronous digital hierarchal system (SDH) to a plesiochronous digital hierarchal system (PDH).

3. A method according to Claim 1 or 2, **characterized** by generating the write addresses (WADR) by counting write clock pulses (WCLP) intermittently in a write counter at one write clock frequency (f_{clw}); generating the read addresses (RADR) by counting read clock pulses (RCLP) intermittently in a read counter at one read clock frequency (f_{clr}); generating the mean value addresses (AVADR) by counting high clock pulses (HCLP) in a mean value counter at a high clock frequency (f_{clh}) which is higher than the write clock frequency and the read clock frequency; basing the number of steps into which adjustment of the mean value addresses is divided on the relationship between the mean value clock frequency and the write clock frequency; and by delaying the read addresses by a time period which corresponds to the time period between two mutually successive read clock pulses.

4. A method according to Claim 3, **characterized** by double-counting a high clock pulse so as to shorten the time period between two successive mean value addresses where applicable; and by omitting a mean value clock pulse so as to extend the time period between two mutually successive mean value addresses, when applicable.

5. A method according to Claim 1, 2, 3 or 4, in which incoming data is distributed on frames whose sizes change intermittently, **characterized** by determining the time period between the two latest time points at which the frame sizes were changed; and when the generation of the mean value address is delayed or hastened, by spreading the steps essentially uniformly over a time period which corresponds to said time period between the two latest time points.

6. A method according to any one of Claims 1, 2, 3, 4 or 5, **characterized** by neither shortening nor extending the time period between certain pairs of mutually sequential mean value addresses when hastening or delaying generation of the mean value addresses.

7. An arrangement for writing data into and reading data from an addressable memory (FIFO), said arrangement including a write address generator and a read address generator, said write address generator functioning to generate a cyclic sequence of write addresses (WADR), wherein data (DATAᵢₙ) is written into memory positions denoted by the write addresses, and said read address generator functioning to generate a cyclic sequence of read addresses (RADR), which includes the same memory addresses as the memory addresses contained in the cyclic sequence of write addresses and in the same order, wherein information (DATAₒᵤₜ) is read-out from memory positions denoted by the read addresses, **characterized** by a mean value address generator for generating a cyclic sequence of mean value addresses (AVADR), said sequence including the same memory addresses as the write addresses and the read addresses and in the same order; by first address comparison means for momentary comparison of the write addresses with the simultaneous mean value addresses or with addresses which have been obtained from the mean value addresses with the aid of determined write address limit values (FL, BL), said first address comparison means functioning to influence the mean value address generator in a manner to hasten or delay the generation of mean value addresses when a momentary write address differs from a simultaneous mean value address at least to an extent such as to correspond to an established write address limit value, such as to reduce the difference between the write addresses and the simultaneous mean value addresses; and further characterized in that the mean value address generator functions to divide the hastening or delaying process into a number of steps by shortening or extending the time period between the generation of some pairs of mutually successive mean value addresses; in that the arrangement includes a second address comparison means for momentary comparison of the read addresses with the simultaneous mean value addresses or with addresses that have been obtained from the mean value addresses with the aid of a read address limit value (SL), said second address comparison means functioning to influence the read address generator in a manner to delay generation of the read addresses when a momentary read address differs from a simultaneous mean value address at least to an extent such as to correspond to the read address limit value; and in that the read address generator functions to generate a cycle of read addresses over a shorter period of time than the time taken by the write address generator to generate a cycle of read addresses in the absence of a delay in the generation of the read addresses.

8. An arrangement according to Claim 7, **characterized** in being implemented in a system in which the addressable memory (FIFO) is used for transmitting data from a synchronous digital hierarchal system (SDH) to a plesiochronous digital hierarchal system (PDH).

9. An arrangement according to Claim 7 or 8, **characterized** in that the write address generator includes a write clock for generating write clock pulses (WCLP) at a write clock frequency (f_{clw}), and a write counter connected to the write clock and functioning to count write clock pulses intermittently; in that the read address generator includes a read clock for generating read clock pulses (RCLP) at a read clock frequency (f_{clr}) and a read counter connected to the read clock and functioning to count read clock pulses intermittently, said read clock frequency differing from the write clock frequency; in that the mean value address generator includes a high frequency clock which functions to generate high frequency clock pulses (HCLP) at a high clock frequency (f_{clh}) which is higher than the write clock frequency and the read clock frequency; in that the mean value address generator includes a mean value counter connected to the mean value clock and functioning to count mean value clock pulses; in that the mean value address generator functions to divide adjustment of the mean value addresses into a number of steps depending on the relationship between the mean value clock frequency and the write clock frequency; and in that the read address generator functions to delay generation of the addresses for a time period corresponding to the time between two mutually successive read clock pulses, when applicable.

10. An arrangement according to Claim 9, **characterized** in that the mean value address generator functions to shorten the time period between two mutually successive mean value addresses when applicable, by double-counting a mean value clock pulse; and in that the mean value address generator functions to extend the time between the generation of two mutually successive mean value addresses when applicable, by not counting a high clock pulse.

11. An arrangement according to Claim 8, 9 or 10, in which incoming data is divided in frames whose sizes are changed intermittently, **characterized** by means (DU) for determining the time period between two latest time points when the size of the frames has been changed; and in that the mean value address generator functions to spread said steps essentially uniformly over a time period which corresponds to said time period between said two latest time points.

12. An arrangement according to Claim 7, 8, 9, 10 or 11, **characterized** in that when hastening or delaying the generation of the mean value addresses, the mean value address generator will not shorten or extend the time period between given pairs of mutually sequential mean value addresses.

13. A teletransmission system comprising a synchronous digital hierarchy system (SDH), a plesiochronous digital hierarchy system (PDH), a FIFO-register for transmitting data from the synchronous system to the plesiochronous system, said teletransmission system designed for adjusting the read-out rate when adding or removing a justification bit when data is written-into the FIFO-register without causing excessive jitter on the output of the FIFO-register, said incoming data arriving to the FIFO-register divided in frames which include a first part containing bit-divided data information which may include an additional justification bit or have a justification bit removed therefrom, and a second part which contains no data information, said FIFO-register including a number of memory positions of which each has a separate address and into which incoming data information (DATAᵢₙ) is written sequentially and bitwise, wherein said FIFO-register has connected thereto
- a write counter for generating write addresses which indicate where incoming data information (DATAᵢₙ) shall be written into the FIFO-register, wherein said write counter has an output which is connected to the FIFO-register and on which the generated write addresses are delivered to said FIFO-register, and wherein said write counter has an input connected to a write clock (WCL) which operates at a write clock frequency (f_{clw}), and wherein the write counter counts write addresses forwardly in keeping with the write clock;
- a read counter having an output which is connected to the FIFO-register and on which the read counter delivers to the FIFO-register addresses from which outgoing data (DATAₒᵤₜ) shall be read, and said read counter having an input connected to a read clock (RCL) and functioning to count forward read addresses in keeping with the read clock;
**characterized** in that the teletransmission system also includes
- a mean value counter having a first input connected to a high frequency clock (HCL) which operates at a frequency which is n times higher than the nominal frequency ((f_{clw})ₙₒₘ) of the write clock, wherein the mean value counter generates a new mean value address after n numbers of forward counts, and said mean value counter having an output on which the generated mean value addresses are delivered;
- a first phase detector (33) having a first input connected to the output of the write counter for detecting generated write addresses, and a second input connected to the output of the mean value counter for detecting generated mean value addresses, and an output connected to a second input on said mean value counter for adjusting the mean value counter, wherein the mean value counter is adjusted incrementally forwards by one mean value address when the write address assumes a front limit value in relation to the mean value address, whereas the mean value counter is adjusted rearwardly incrementally by one mean value address when the write address assumes a back limit value in relation to the mean value address; and
- a second phase detector having a first input connected to the read counter output for detecting generated read addresses, and having a second input connected to the output of the mean value counter for detecting generated mean value addresses, and having an output connected to a frame generator for adjusting read-out, wherein the second phase detector delivers a phase error signal (PE) to the frame generator when t.he read address takes a stuffing limit value in relation to the detected mean value address, and wherein the frame generator stops reading-out for the duration of one read clock pulse upon receipt of said phase error signal.

14. A teletransmission system according to Claim 13, **characterized** in that
- a detection unit (DU) is connected to the incoming data signal (DATAᵢₙ) for detection of justification bits (JUST);
- the detection unit (DU) is connected to a control unit (61) in the first phase detector (33) for delivering an information signal (INF) to said control unit upon detection of a justification bit;
- the control unit (61) functions to calculate the time period between each step in the adjustment of the mean value counter on the basis of the time period between the two latest information signals (INF); and
- a counter unit (62) connected to said control unit (61) is set to control the control unit (61) in a manner to adjust the mean value counter incrementally with the time lapse between each step, in accordance with calculations effected in the control unit.

## Patentansprüche

1. Verfahren zum Einschreiben von Daten in einen und Auslesen von Daten aus einem adressierbaren Speicher (FIFO), mit aufeinanderfolgender Erzeugung einer zyklischen Sequenz von Schreibadressen (WADR), wobei Daten (DATAᵢₙ) in Speicherpositionen in dem Speicher eingeschrieben werden, die durch die Schreibadressen festgelegt werden, wobei eine zyklische Sequenz von Leseadressen (RADR) erzeugt wird, wobei die Sequenz der Leseadressen dieselben Speicheradressen wie jene Speicheradressen enthält, die in der zyklischen Sequenz der Schreibadressen enthalten sind, und in derselben Reihenfolge wie die Speicheradressen, und wobei Information (DATAₒᵤₜ) aus Speicherpositionen ausgelesen wird, die durch die Leseadressen festgelegt werden,
dadurch **gekennzeichnet,** daß eine zyklische Sequenz von Mittelwertadressen (AVADR) gebildet wird, welche dieselben Speicheradressen wie die Schreibadressen und die Leseadressen und in derselben Reihenfolge enthält; vordere und hintere Schreibadressengrenzwerte (FL, BL) für hinnehmbare Differenzen zwischen einer Schreibadresse und einer gleichzeitigen Mittelwertadresse gebildet werden; die Schreibadressen momentan mit den gleichzeitigen Mittelwertadressen oder mit Adressen verglichen werden, die aus den Mittelwertadressen unter Zuhilfenahme der Schreibadressengrenzwerte erhalten wurden; die Erzeugung aufeinanderfolgender Mittelwertadressen vorgestellt oder verzögert wird, wenn sich eine momentane Schreibadresse von einer gleichzeitigen Mittelwertadresse zumindest in einem solchen Ausmaß unterscheidet, daß dies einem festgelegten Schreibadressengrenzwert entspricht, um so die Differenz zwischen den Schreibadressen und den gleichzeitigen Mittelwertadressen zu verringern; die Vorstell- oder Verzögerungsvorgänge dadurch in einer Anzahl an Schritten unterteilt werden, daß die Zeit zwischen der Erzeugung einiger Paare aufeinanderfolgender Mittelwertadressen verkürzt oder verlängert wird; ein Leseadressengrenzwert (SL) festgelegt wird; die Leseadressen momentan mit den gleichzeitigen Mittelwertadressen oder mit Adressen verglichen werden, die aus den Mittelwertadressen unter Zuhilfenahme des Leseadressengrenzwertes erhalten werden; die Erzeugung einer Leseadresse verzögert wird, wenn sich eine momentane Leseadresse von einer simultanen Mittelwertadresse zumindest in solchem Ausmaß unterscheidet, daß dies festgelegten Leseadressengrenzwert entspricht; und ein Zyklus von Leseadressen über einen kürzeren Zeitraum erzeugt wird als ein Zyklus von Leseadressen, wenn die Erzeugung der Leseadressen nicht verzögert wird.

2. Verfahren nach Anspruch 1,
dadurch **gekennzeichnet**, daß es in einem System implementiert ist, in welchem der adressierbare Speicher (FIFO) zur Übertragung von Daten von einem System mit synchroner digitaler Hierarchie (SDH) an ein System mit plesiochroner Hierarchie (PDH) verwendet wird.

3. Verfahren nach Anspruch 1 oder 2,
**gekennzeichnet** durch Erzeugung der Schreibadressen (WADR) durch Zählen von Schreibtaktimpulsen (WCLP) intermittierend in einem Schreibzähler bei einer Schreibtaktfrequenz (f_{clw}); Erzeugung der Leseadressen (RADR) durch Zählen von Lesetaktimpulsen (RCLP) intermittierend in einem Lesezähler bei einer Lesetaktfrequenz (f_{clr}); Erzeugung der Mittelwertadressen (AVADR) durch Zählen von Taktimpulsen (HCLP) auf dem Pegel "H" in einem Mittelwertzähler bei einer hohen Taktfrequenz (f_{clh}), die höher ist als die Schreibtaktfrequenz und die Lesetaktfrequenz; Festlegung der Anzahl an Schritten, in welche die Einstellung der Mittelwertadressen aufgeteilt wird, auf der Grundlage der Beziehung zwischen der Maximalwerttaktfrequenz und der Schreibtaktfrequenz; und durch Verzögern der Leseadressen um einen Zeitraum, welcher dem Zeitraum zwischen zwei aufeinanderfolgenden Lesetaktimpulsen entspricht.

4. Verfahren nach Anspruch 3,
**gekennzeichnet** durch doppelte Zählung eines Taktimpulses auf dem Pegel "H", um so den Zeitraum zwischen zwei aufeinanderfolgenden Mittelwertadressen zu verkürzen, wo dies durchführbar ist; und durch Weglassen eines Maximalwerttaktimpulses, um so den Zeitraum zwischen zwei aufeinanderfolgenden Mittelwertadressen zu verlängern, wo dies durchführbar ist.

5. Verfahren nach Anspruch 1, 2, 3 oder 4, bei welchem ankommende Daten auf Rahmen verteilt sind, deren Größen sich intermittierend ändern,
**gekennzeichnet** durch Bestimmung des Zeitraums zwischen den zwei letzten Zeitpunkten, an denen die Rahmengrößen geändert wurden; und, wenn die Erzeugung der Mittelwertadresse verzögert oder vorgestellt wird, durch Ausbreiten der Schritte im wesentlichen gleichförmig über einen Zeitraum, welcher dem Zeitraum zwischen den beiden letzten Zeitpunkten entspricht.

6. Verfahren nach einem der Ansprüche 1, 2, 3, 4 oder 5,
**gekennzeichnet** durch weder Verkürzen noch Verlängern des Zeitraums zwischen bestimmten Paaren aufeinanderfolgender Mittelwertadressen, wenn die Erzeugung der Mittelwertadressen vorgestellt oder verzögert wird.

7. Anordnung zum Einschreiben von Daten in einen und zum Auslesen von Daten von einem adressierbaren Speicher (FIFO), wobei die Anordnung einen Schreibadressengenerator und einen Leseadressengenerator aufweist, der Leseadressengenerator so arbeitet, daß er eine zyklische Sequenz an Schreibadressen (WADR) erzeugt, wobei Daten (DATAᵢₙ) in durch die Schreibadressen festgelegte Speicherpositionen eingeschrieben werden, und der Leseadressengenerator so arbeitet, daß er eine zyklische Sequenz von Leseadressen (RADR) erzeugt, welche dieselben Speicheradressen enthalten wie jene Schreibadressen, die in der zyklischen Sequenz der Schreibadressen enthalten ist, und in derselben Reihenfolge, wobei Information (DATAₒᵤₜ) aus Speicherpositionen ausgelesen wird, die durch die Leseadressen festgelegt werden,
**gekennzeichnet** durch einen Mittelwertadressengenerator zur Erzeugung einer zyklischen Sequenz von Mittelwertadressen (AVADR), wobei die Sequenz dieselben Speicheradressen wie die Schreibadressen und die Leseadressen und in derselben Reihenfolge enthält; eine erste Adressenvergleichsvorrichtung für einen momentanen Vergleich der Schreibadressen mit den gleichzeitigen Mittelwertadressen oder mit Adressen, die aus den Mittelwertadressen unter Zuhilfenahme festgestellter Schreibadressengrenzwerte (FL, BL) erhalten wurden, wobei die erste Adressenvergleichsvorrichtung so arbeitet, daß sie den Mittelwertadressengenerator auf solche Weise beeinflußt, daß die Erzeugung von Mittelwertadressen vorgestellt oder verzögert wird, wenn sich eine momentane Schreibadresse von einer gleichzeitigen Mittelwertadresse zumindest in solchem Ausmaß unterscheidet, daß dies einem festgelegten Schreibadressengrenzwert entspricht, um so die Differenz zwischen den Schreibadressen und den gleichzeitigen Mittelwertadressen zu verringern; und dadurch gekennzeichnet, daß der Mittelwertadressengenerator so arbeitet, daß er den Vorstell- oder Verzögerungsvorgang in eine Anzahl an Schritten unterteilt, durch Verkürzung oder Verlängerung des Zeitraums zwischen der Erzeugung einiger Paare aufeinanderfolgender Mittelwertadressen; daß die Anordnung eine zweite Adressenvergleichsvorrichtung für den momentanen Vergleich der Leseadressen mit den gleichzeitigen Mittelwertadressen oder mit Adressen aufweist, die aus den Mittelwertadressen unter Zuhilfenahme eines Leseadressengrenzwertes (SL) erhalten wurde, die zweite Adressenvergleichsvorrichtung so arbeitet, daß sie den Leseadressengenerator auf solche Weise beeinflußt, daß die Erzeugung der Leseadressen verzögert wird, wenn sich eine momentane Leseadresse von einer gleichzeitigen Mittelwertadresse zumindest in solchem Ausmaß unterscheidet, daß dies dem Leseadressengrenzwert entspricht; und daß der Leseadressengenerator so arbeitet, daß er einen Zyklus von Leseadressen über einen kürzeren Zeitraum als den Zeitraum erzeugt, der von dem Schreibadressengenerator dazu benötigt wird, einen Zyklus von Leseadressen bei Nichtvorhandensein einer Verzögerung bei der Erzeugung der Leseadressen zu erzeugen.

8. Anordnung nach Anspruch 7,
dadurch **gekennzeichnet**, daß sie in einem System implementiert ist, in welchem der adressierbare Speicher (FIFO) zur Übertragung von Daten von einem System mit synchroner digitaler Hierarchie (SDH) an ein System mit plesiochroner digitaler Hierarchie (PDH) verwendet wird.

9. Anordnung nach Anspruch 7 oder 8,
dadurch **gekennzeichnet**, daß der Schreibadressengenerator einen Schreibtakt zur Erzeugung von Schreibtaktimpulsen (WCLP) mit einer Schreibtaktfrequenz (f_{clw}) aufweist, sowie einen Schreibzähler, der an den Schreibtakt angeschlossen ist und so arbeitet, daß er intermittierend Schreibtaktimpulse zählt; daß der Leseadressengenerator einen Lesetakt zur Erzeugung von Lesetaktimpulsen (RCLP) mit einer Lesetaktfrequenz (f_{clr}) sowie einen Lesezähler aufweist, der an den Lesetakt angeschlossen ist und so arbeitet, daß er Lesetaktimpulse intermittierend zählt, wobei sich die Lesetaktfrequenz von der Schreibtaktfrequenz unterscheidet; daß der Mittelwertadressengenerator einen Hochfrequenztakt aufweist, der so arbeitet, daß er Hochfrequenztaktimpulse (HCLP) auf einer hohen Taktfrequenz (f_{clh}) erzeugt, die höher ist als die Schreibtaktfrequenz und die Lesetaktfrequenz; daß der Mittelwertadressengenerator einen Mittelwertzähler aufweist, der an den Mittelwerttakt angeschlossen ist und so arbeitet, daß er Mittelwerttaktimpulse zählt; daß der Mittelwertadressengenerator so arbeitet, daß er die Einstellung der Mittelwertadressen auf eine Anzahl an Schritten aufteilt, abhängig von der Beziehung zwischen der Mittelwerttaktfrequenz und der Schreibtaktfrequenz; und daß der Leseadressengenerator so arbeitet, daß er die Erzeugung der Adressen für einen Zeitraum entsprechend dem Zeitraum zwischen zwei aufeinanderfolgenden Lesetaktimpulsen verzögert, wenn dies durchführbar ist.

10. Anordnung nach Anspruch 9,
dadurch **gekennzeichnet**, daß der Mittelwertadressengenerator so arbeitet, daß er den Zeitraum zwischen zwei aufeinanderfolgenden Mittelwertadressen verkürzt, wenn dies durchführbar ist, durch doppelte Zählung eines Mittelwerttaktimpulses; und daß der Mittelwertadressengenerator so arbeitet, daß er den Zeitraum zwischen der Erzeugung von zwei aufeinanderfolgenden Mittelwertadressen verlängert, wenn dies durchführbar ist, und zwar dadurch, daß er einen Taktimpuls auf dem Pegel "H" nicht zählt.

11. Anordnung nach Anspruch 8, 9 oder 10, bei welcher ankommende Daten auf Rahmen aufgeteilt sind, deren Größen sich intermittierend ändern,
**gekennzeichnet** durch eine Vorrichtung (DU) zur Bestimmung des Zeitraums zwischen zwei letzten Zeitpunkten, wenn sich die Größe der Rahmen geändert hat; wobei der Mittelwertadressengenerator so arbeitet, daß er die Schritte im wesentlichen gleichförmig über einen Zeitraum ausbreitet, welcher dem Zeitraum zwischen den beiden letzten Zeitpunkten entspricht.

12. Anordnung nach Anspruch 7, 8, 9, 10 oder 11,
dadurch **gekennzeichnet**, daß beim Vorstellen oder Verzögern der Erzeugung der Mittelwertadressen der Mittelwertadressengenerator nicht den Zeitraum zwischen vorbestimmten Paaren aufeinanderfolgender Mittelwertadressen verkürzt oder verlängert.

13. Telekommunikationssystem mit einem System mit synchroner digitaler Hierarchie (SDH), einem System mit plesiochroner digitaler Hierarchie (PDH), einem FIFO-Register zur Übertragung von Daten von dem synchronen System an das plesiochrone System, wobei das Telekommunikationssystem so ausgelegt ist, daß es die Ausleserate einstellt, wenn ein Justierbit hinzugefügt oder entfernt wird, wenn Daten in das FIFO-Register eingeschrieben werden, ohne übermäßige Flackerschwankungen am Ausgang des FIFO-Registers hervorzurufen, wobei die ankommenden Daten an dem FIFO-Register in Rahmen aufgeteilt ankommen, welche einen ersten Teil enthalten, der bitunterteilte Dateninformation enthält, welche ein zusätzliches Justierbit enthalten kann, oder aus welcher ein Justierbit entnommen sein kann, und einen zweiten Teil, der keine Dateninformation enthält, wobei das FIFO-Register eine Anzahl an Speicherpositionen aufweist, die jeweils eine getrennte Adresse aufweisen, und in welche ankommende Dateninformation (DATAᵢₙ) sequentiell und bitweise eingeschrieben wird, wobei an das FIFO-Register angeschlossen sind:
- ein Schreibzähler zur Erzeugung von Schreibadressen, die angeben, wo ankommende Dateninformation (DATAᵢₙ) in das FIFO-Register eingeschrieben werden soll, wobei der Schreibzähler einen Ausgang aufweist, der mit dem FIFO-Register verbunden ist, und durch welchen die erzeugten Schreibadressen an das FIFO-Register geliefert werden, und wobei der Schreibzähler einen Eingang aufweist, der an einen Schreibtakt (WCL) angeschlossen ist, der mit einer Schreibtaktfrequenz (f_{clw}) arbeitet, und wobei der Schreibzähler Schreibadressen in Vorwärtsrichtung entsprechend dem Schreibtakt zählt;
- ein Lesezähler, der einen Ausgang aufweist, der mit dem FIFO-Register verbunden ist, und durch welchen der Lesezähler an das FIFO-Register Adressen liefert, aus welchen abgehende Daten (DATAₒᵤₜ) ausgelesen werden sollen, wobei der Lesezähler einen Eingang aufweist, der an einen Lesetakt (RCL) angeschlossen ist, und so arbeitet, daß er Leseadressen in Vorwärtsrichtung entsprechend dem Lesetakt zählt;
dadurch **gekennzeichnet**, daß das Telekommunikationssystem weiterhin aufweist:
- einen Mittelwertzähler, der einen ersten Eingang aufweist, der an einen Hochfrequenztakt (HCL) angeschlossen ist, der bei einer Frequenz arbeitet, die n-Mal höher ist als die Nominalfrequenz ((f_{clw})ₙₒₘ) des Schreibtaktes, wobei der Mittelwertzähler eine neue Mittelwertadresse nach einer Anzahl n an Vorwärtszählungen erzeugt, und der Mittelwertzähler einen Ausgang aufweist, durch welchen die erzeugten Mittelwertadressen geliefert werden;
- einen ersten Phasendetektor (33), der einen ersten Eingang aufweist, der an den Ausgang des Schreibzählers angeschlossen ist, um erzeugte Schreibadressen festzustellen, und einen zweiten Eingang, der mit dem Ausgang des Mittelwertzählers verbunden ist, um erzeugte Mittelwertadressen festzustellen, sowie einen Ausgang, der an einen zweiten Eingang des Mittelwertzählers angeschlossen ist, um den Mittelwertzähler einzustellen, wobei der Mittelwertzähler schrittweise in Vorwärtsrichtung durch eine Mittelwertadresse eingestellt wird, wenn die Schreibadresse einen vorderen Grenzwert in Bezug auf die Mittelwertadresse annimmt, wogegen der Mittelwertzähler schrittweise in Rückwärtsrichtung durch eine Mittelwertadresse eingestellt wird, wenn die Schreibadresse einen hinteren Grenzwert in Bezug auf die Mittelwertadresse annimmt; und
- einen zweiten Phasendetektor, der einen ersten Eingang aufweist, der an den Lesezählerausgang angeschlossen ist, um erzeugte Leseadressen festzustellen, und einen zweiten Eingang aufweist, der mit dem Ausgang des Mittelwertzählers verbunden ist, um erzeugte Mittelwertadressen festzustellen, und einen Ausgang aufweist, der an einen Rahmengenerator zur Einstellung des Auslesens angeschlossen ist, wobei der zweite Phasendetektor ein Phasenfehlersignal (PE) an den Rahmengenerator liefert, wenn die Leseadresse einen Stopfgrenzwert in Bezug auf die festgestellte Mittelwertadresse annimmt, und wobei der Rahmengenerator das Auslesen für die Dauer eines Lesetaktimpulses nach Empfang des Phasenfehlersignals anhält.

14. Telekommunikationssystem nach Anspruch 13,
dadurch **gekennzeichnet**, daß
- eine Feststellungseinheit (DU) an das ankommende Datensignal (DATAᵢₙ) zur Feststellung von Justierbits (JUST) angeschlossen ist;
- Feststellungseinheit (DU) an eine Steuereinheit (61) in dem ersten Phasendetektor (33) zum Liefern eines Informationssignals (INF) an die Steuereinheit nach Feststellung eines Justierbits angeschlossen ist;
- die Steuereinheit (61) so arbeitet, daß sie den Zeitraum zwischen dem Schritt bei der Einstellung des Mittelwertzählers auf der Grundlage des Zeitraums zwischen den beiden letzten Informationssignalen (INF) berechnet; und
- eine an die Steuereinheit (61) angeschlossene Zählereinheit (62) so eingestellt ist, daß sie die Steuereinheit (61) so steuert, daß der Mittelwertzähler schrittweise durch die zwischen jeweils zwei Schritten abgelaufene Zeit eingestellt wird, entsprechend Berechnungen, die in der Steuereinheit durchgeführt werden.

## Revendications

1. Procédé concernant l'écriture de données dans une mémoire adressable et la lecture de données à partir de cette mémoire adressable (FIFO), comprenant la génération successivement d'une séquence cyclique d'adresses d'écriture (WADR), dans laquelle des données (DATAᵢₙ) sont écrites dans la mémoire dans des positions de mémoire désignées par les adresses d'écriture, dans lequel une séquence cyclique d'adresses de lecture (RADR) est générée, dans lequel la séquence d'adresses de lecture comprend les mêmes adresses de mémoire que les adresses de mémoire qui sont contenues dans la séquence cyclique d'adresses d'écriture et dans le même ordre que lesdites adresses de mémoire et dans lequel des informations (DATAₒᵤₜ) sont extraites de positions de mémoire désignées par des adresses d'écriture, caractérisé par la formation d'une séquence cyclique d'adresses de valeurs moyennes (AVADR) qui comprend les mêmes adresses de mémoire que les adresses d'écriture et les adresses de lecture et dans le même ordre ; l'établissement de valeurs limites avant et arrière (FL, BL) d'adresses d'écriture pour des différences acceptables entre une adresse d'écriture et une adresse de valeur moyenne simultanée ; la comparaison des adresses d'écriture momentanément avec des adresses de valeurs moyennes simultanées ou avec des adresses qui ont été obtenues à partir des adresses de valeurs moyennes à l'aide des valeurs limites d'adresses d'écriture ; l'avancement ou le retardement de la génération des adresses de valeurs moyennes suivantes lorsqu'une adresse d'écriture momentanée diffère d'une adresse de valeur moyenne simultanée au moins à un degré qui correspond à une valeur limite d'adresse d'écriture établie, afin de diminuer la différence entre les adresses d'écriture et les adresses de valeurs moyennes simultanées ; la division des processus d'avancement ou de retardement en un nombre d'étapes en raccourcissant ou prolongeant le temps entre la génération de certaines paires d'adresses de valeurs moyennes mutuellement séquentielles ; l'établissement d'une valeur limite d'adresse de lecture (SL) ; la comparaison des adresses de lecture momentanément avec les adresses de valeurs moyennes simultanées ou avec des adresses qui ont été obtenues à partir des adresses de valeurs moyennes à l'aide de la valeur limite d'adresses de lecture ; le retardement de la génération d'une adresse de lecture lorsqu'une adresse de lecture momentanée diffère d'une adresse de valeur moyenne simultanée, au moins à un degré qui correspond à la valeur limite d'adresse de lecture établie ; et la génération d'un cycle d'adresses de lecture sur une période de temps plus courte qu'un cycle d'adresses de lecture lorsque la génération desdites adresses de lecture n'est pas retardée.

2. Procédé selon la revendication 1, caractérisé en ce qu'il est mis en oeuvre dans un système dans lequel la mémoire adressable (FIFO) est utilisée pour la transmission de données depuis un système numérique synchrone hiérarchisé (SDH) jusqu'à un système numérique plésiochrone hiérarchisé (PDH).

3. Procédé selon la revendication 1 ou 2, caractérisé par la génération des adresses de lecture (WADR) en comptant des impulsions d'horloge d'écriture (WCLP) par intermittence dans un compteur de lecture à une première fréquence d'horloge d'écriture (f_{clw}) ; la génération des adresses (RADR) de lecture en comptant des impulsions d'horloge de lecture (RCLP) par intermittence dans un compteur de lecture à une première fréquence d'horloge de lecture (f_{clr}) ; la génération des adresses de valeurs moyennes (AVADR) en comptant des impulsions d'horloge hautes (HCLP) dans un compteur de valeur moyenne à une fréquence d'horloge haute (f_{clh}) qui est plus élevée que la fréquence d'horloge d'écriture et que la fréquence d'horloge de lecture ; en basant le nombre d'étapes dans lequel un ajustement des adresses de valeurs moyennes est divisé sur la relation entre la fréquence d'horloge de valeurs moyennes et la fréquence d'horloge d'écriture ; et en retardant les adresses de lecture d'une période de temps qui correspond à la période de temps comprise entre deux impulsions d'horloge de lecture mutuellement successives.

4. Procédé selon la revendication 3, caractérisé par un comptage double d'une impulsion d'horloge haute afin de raccourcir la période de temps entre deux adresses de valeurs moyennes successives lorsque cela est applicable ; et par l'omission d'une impulsion d'horloge de valeurs moyennes afin de prolonger la période de temps entre deux adresses de valeurs moyennes mutuellement successives, lorsque cela est applicable.

5. Procédé selon la revendication 1, 2, 3 ou 4, dans lequel des données entrantes sont distribuées en blocs dont les dimensions changent par intermittence, caractérisé par la détermination de la période de temps entre les deux derniers instants auxquels les dimensions des blocs ont changé ; et, lorsque la génération de l'adresse de valeur moyenne est retardée ou avancée, en étalant les étapes essentiellement uniformément sur une période de temps qui correspond à ladite période de temps entre les deux derniers instants.

6. Procédé selon l'une quelconque des revendications 1, 2, 3, 4 ou 5, caractérisé en ce qu'on ne raccourcit ni ne prolonge la période de temps entre certaines paires de valeurs d'adresses moyennes mutuellement séquentielles lorsqu'on avance ou retarde la génération des adresses de valeurs moyennes.

7. Agencement pour écrire des données dans une mémoire adressable et pour extraire des données de cette mémoire adressable (FIFO), ledit agencement comprenant un générateur d'adresses d'écriture et un générateur d'adresses de lecture, ledit générateur d'adresses d'écriture fonctionnant de façon à générer une séquence cyclique d'adresses d'écriture (WADR), dans laquelle des données (DATAᵢₙ) sont écrites dans des positions de mémoire désignées par les adresses d'écriture, et ledit générateur d'adresses de lecture fonctionnant de façon à générer une séquence cyclique d'adresses de lecture (RADR), qui comprend les mêmes adresses de mémoire que les adresses de mémoire contenues dans la séquence cyclique d'adresses d'écriture et dans le même ordre, dans lequel des informations (DATAₒᵤₜ) sont extraites de positions de mémoire désignées par les adresses de lecture, caractérisé par un générateur d'adresses de valeurs moyennes destiné à générer une séquence cyclique d'adresses de valeurs moyennes (AVADR), ladite séquence comprenant les mêmes adresses de mémoire que les adresses d'écriture et que les adresses de lecture et dans le même ordre ; par un premier moyen de comparaison d'adresse destiné à comparer momentanément les adresses d'écriture aux adresses de valeurs moyennes simultanées ou à des adresses qui ont été obtenues à partir des adresses de valeurs moyennes, à l'aide de valeurs limites déterminées des adresses de lecture (FL, BL), ledit premier moyen de comparaison d'adresses fonctionnant de façon à influencer le générateur d'adresses de valeurs moyennes de manière à avancer ou retarder la génération d'adresses de valeur moyenne lorsqu'une adresse d'écriture momentanée diffère d'une adresse de valeur moyenne simultanée au moins à un degré tel qu'il correspond à une valeur limite d'adresse d'écriture établie, afin de réduire la différence entre les adresses d'écriture et les adresses de valeurs moyennes simultanées ; et caractérisé en outre en ce que le générateur d'adresses de valeurs moyennes fonctionne de façon à diviser le processus d'avancement ou de retardement en un certain nombre d'étapes en raccourcissant ou allongeant la période de temps entre la génération de certaines paires d'adresses de valeurs moyennes mutuellement successives ; en ce que l'agencement comprend un second moyen de comparaison d'adresses destiné à comparer momentanément les adresses de lecture aux adresses de valeurs moyennes simultanées ou à des adresses qui ont été obtenues à partir des adresses de valeurs moyennes à l'aide d'une valeur limite d'adresse de lecture (SL), ledit second moyen de comparaison d'adresse fonctionnant de façon à influencer le générateur d'adresses de lecture de manière à retarder la génération des adresses de lecture lorsqu'une adresse de lecture momentanée diffère d'une adresse de valeur moyenne simultanée au moins à un degré tel qu'il correspond à la valeur limite d'adresse de lecture ; et en ce que le générateur d'adresse de lecture fonctionne de façon à générer un cycle d'adresses de lecture sur une période de temps plus courte que le temps mis par le générateur d'adresses de lecture pour générer un cycle d'adresses de lecture en l'absence d'un retard dans la génération des adresses de lecture.

8. Agencement selon la revendication 7, caractérisé en ce qu'il est mis en oeuvre dans un système dans lequel la mémoire adressable (FIFO) est utilisée pour transmettre des données depuis un système numérique synchrone hiérarchique (SDH) jusqu'à un système numérique plésiochrone hiérarchique (PDH).

9. Agencement selon la revendication 7 ou 8, caractérisé en ce que le générateur d'adresses de lecture comprend une horloge d'écriture pour générer des impulsions d'horloge d'écriture (WCLP) à une fréquence d'horloge d'écriture (f_{clw}), et un compteur d'écriture connecté à l'horloge d'écriture et fonctionnant de façon à compter des impulsions d'horloge d'écriture par intermittence ; en ce que le générateur d'adresses de lecture comprend une horloge de lecture destinée à générer des impulsions d'horloge de lecture (RCLP) à une fréquence d'horloge de lecture (f_{clr}) et un compteur de lecture connecté à l'horloge de lecture et fonctionnant de façon à compter des impulsions d'horloge de lecture par intermittence, ladite fréquence d'horloge de lecture différant de la fréquence d'horloge d'écriture ; en ce que le générateur d'adresses de valeurs moyennes comprend une horloge à haute fréquence qui fonctionne de façon à générer des impulsions d'horloge à haute fréquence (HCLP) à une fréquence d'horloge haute (f_{clh}) qui est supérieure à la fréquence d'horloge d'écriture et à la fréquence d'horloge de lecture ; en ce que le générateur d'adresses de valeurs moyennes comprend un compteur de valeurs moyennes connecté à l'horloge de valeurs moyennes et fonctionnant de façon à compter les impulsions d'horloge de valeurs moyennes ; en ce que le générateur d'adresses de valeurs moyennes fonctionne de façon à diviser un ajustement des adresses de valeurs moyennes en un certain nombre d'étapes suivant la relation entre la fréquence d'horloge de valeur moyenne et la fréquence d'horloge d'écriture ; et en ce que le générateur d'adresses de lecture fonctionne de façon à retarder la génération des adresses pendant une période de temps correspondant au temps compris entre deux impulsions d'horloge de lecture mutuellement successives, lorsque cela est applicable.

10. Agencement selon la revendication 9, caractérisé en ce que le générateur d'adresses de valeurs moyennes fonctionne de façon à raccourcir la période de temps comprise entre deux adresses de valeurs moyennes mutuellement successives lorsque cela est applicable, par un comptage double d'une impulsion d'horloge de valeur moyenne ; et en ce que le générateur d'adresses de valeurs moyennes fonctionne de façon à prolonger le temps compris entre les générations de deux adresses de valeurs moyennes mutuellement successives, lorsque cela est applicable, en ne comptant pas une impulsion d'horloge haute.

11. Agencement selon la revendication 8, 9 ou 10, dans lequel des données d'entrée sont divisées en blocs dont les dimensions sont modifiées par intermittence, caractérisé par un moyen (DU) destiné à déterminer la période de temps comprise entre les deux derniers instants auxquels la dimension des blocs a été modifiée ; et en ce que le générateur d'adresses de valeurs moyennes fonctionne de façon à étaler lesdites étapes de manière essentiellement uniforme sur une période de temps qui correspond auxdites périodes de temps comprises entre lesdits deux derniers instants.

12. Agencement selon la revendication 7, 8, 9, 10 ou 11, caractérisé en ce que, lorsqu'on avance ou retarde la génération des adresses de valeurs moyennes, le générateur d'adresses de valeurs moyennes ne raccourcit ou n'allonge pas la période de temps comprise entre les paires données d'adresses de valeurs moyennes mutuellement séquentielles.

13. Système de télétransmission comportant un système numérique synchrone à hiérarchie (SDH), un système numérique plésiochrone à hiérarchie (PDH), un registre FIFO pour la transmission de données du système synchrone au système plésiochrone, ledit système de télétransmission étant conçu pour ajuster la vitesse d'extraction lors de l'addition de l'enlèvement d'un bit de justification lorsque les données sont écrites dans le registre FIFO sans provoquer une gigue excessive sur le signal de sortie du registre FIFO, lesdites données d'entrée arrivant au registre FIFO divisées en blocs qui comprennent une première partie contenant des informations de données divisées par bits qui peuvent comprendre un bit de justification additionnel ou avoir un bit de justification qui en est élevé, et une seconde partie qui ne contient pas d'informations de données, ledit registre FIFO comprenant un certain nombre de positions de mémoire ayant chacune une adresse séparée et dans lesquelles des informations de données d'entrée (DATAᵢₙ) sont écrites séquentiellement par bit, dans lequel sont connectées audit registre FIFO
- un compteur d'écriture destiné à générer des adresses d'écriture qui indiquent où des informations de données d'entrée (DATAᵢₙ) doivent être écrites dans le registre FIFO, ledit compteur d'écriture ayant une sortie qui est connectée au registre FIFO et sur laquelle les adresses d'écriture générées sont délivrées audit registre FIFO, et ledit compteur d'écriture ayant une entrée connectée à une horloge d'écriture (WCL) qui fonctionne à une fréquence d'horloge d'écriture (f_{clw}), et le compteur d'écriture comptant de façon progressive des adresses d'écriture en accord avec l'horloge d'écriture ;
- un compteur de lecture ayant une sortie qui est connectée au registre FIFO et sur laquelle le compteur d'écriture délivre au registre FIFO des adresses desquelles des données de sortie (DATAₒᵤₜ) doivent être extraites, et ledit compteur de lecture ayant une entrée connectée à une horloge de lecture (RCL) et fonctionnant de façon à compter dans le sens progressif des adresses de lecture en accord avec l'horloge de lecture ;
caractérisé en ce que le système de télétransmission comprend aussi
- un compteur de valeurs moyennes ayant une première entrée connectée à une horloge de fréquence haute (HCL) qui fonctionne à une fréquence qui est n fois plus élevée que la fréquence nominale (f_{clw})ₙₒₘ) de l'horloge d'écriture, le compteur de valeurs moyennes générant une nouvelle adresse de valeurs moyennes après n nombres de comptages progressifs, et ledit compteur de valeurs moyennes ayant une sortie sur laquelle les adresses de valeurs moyennes générées sont délivrées ;
- un premier détecteur de phase (33) ayant une première entrée connectée à la sortie du compteur d'adresses pour détecter des adresses d'écriture générées, et une seconde entrée connectée à la sortie du compteur de valeurs moyennes pour détecter des adresses de valeurs moyennes générées, et une sortie connectée à une seconde entrée sur ledit compteur de valeurs moyennes pour ajuster le compteur de valeurs moyennes, le compteur de valeurs moyennes étant ajusté incrémentiellement dans le sens progressif d'une adresse de valeurs moyennes lorsque l'adresse d'écriture prend une valeur limite avant en association avec l'adresse de valeur moyenne, alors que le compteur de valeurs moyennes est ajusté incrémentiellement dans le sens régressif d'une adresse de valeurs moyennes lorsque l'adresse d'écriture prend une valeur limite arrière en relation avec l'adresse de valeur moyenne ; et
- un second détecteur de phase ayant une première entrée connectée à la sortie du compteur de lecture pour détecter des adresses de lecture générées, et ayant une seconde entrée connectée à la sortie du compteur de valeurs moyennes pour détecter des adresses de valeurs moyennes générées, et ayant une sortie connectée à un générateur de bloc pour ajuster l'extraction, le second détecteur de phase délivrant un signal d'erreur de phase (PE) au générateur de bloc lorsque l'adresse de lecture prend une valeur limite de bourrage en relation avec l'adresse de valeur moyenne détectée, et le générateur de bloc arrêtant l'extraction pendant la durée d'une impulsion d'horloge pendant la durée d'une impulsion d'horloge de lecture à la suite de la réception dudit signal d'erreur de phase.

14. Système de télétransmission selon la revendication 13, caractérisé en ce que
- une unité de détection (DU) est connectée au signal de données d'entrée (DATAᵢₙ) pour la détection de bits de justification (JUST) ;
- l'unité de détection (DU) est connectée à une unité de commande (61) dans le premier détecteur de phase (33) pour délivrer un signal d'information (INF) à ladite unité de commande à la suite de la détection d'un bit de justification ;
- l'unité de commande (61) fonctionne de façon à calculer la période de temps entre chaque étape dans l'ajustement du compteur de valeur moyenne sur la base de la période de temps entre les deux derniers signaux d'informations (INF) ; et
- une unité à compteur (62) connectée à ladite unité de commande (61) est établie de façon à commander l'unité de commande (61) de manière à ajuster le compteur de valeurs moyennes incrémentiellement avec le temps écoulé entre chaque étape, conformément à des calculs effectués dans l'unité de commande.
